(19) Europäisches Patentamt
European Patent Office
Office européen des brevets

(11) EP 3 247 755 B1

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(21) Anmeldenummer: **16700185.8**

(22) Anmeldetag: **08.01.2016**

(51) Int Cl.:
***C09D 123/00*** *(2006.01)*

(86) Internationale Anmeldenummer:
**PCT/EP2016/050261**

(87) Internationale Veröffentlichungsnummer:
**WO 2016/116299 (28.07.2016 Gazette 2016/30)**

(54) **WÄSSRIGE DISPERSIONEN ENTHALTEND MEHRSTUFIG HERGESTELLTE POLYMERISATE SOWIE DIESE ENTHALTENDE BESCHICHTUNGSMITTELZUSAMMENSETZUNG**

MULTI-STAGE POLYMERISATES CONTAINING AQUEOUS DISPERSIONS AND COATING COMPOSITIONS CONTAINING THEM

DISPERSIONS AQUEUSES CONTENANT DES PRODUITS DE POLYMÉRISATION MULTICOUCHES ET COMPOSITIONS D’AGENT DE REVÊTEMENT LES CONTENANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2015 EP 15152001**

(43) Veröffentlichungstag der Anmeldung:
**29.11.2017 Patentblatt 2017/48**

(73) Patentinhaber: **BASF Coatings GmbH**
**48165 Münster (DE)**

(72) Erfinder:
- **CORTEN, Cathrin**
  **59423 Unna (DE)**
- **EIERHOFF, Dirk**
  **48163 Münster (DE)**
- **SCHNIEDERS, Britta**
  **49716 Meppen (DE)**
- **FREITAG, Nicole**
  **48163 Münster (DE)**
- **GRUMPE, Heinz-Ulrich**
  **48151 Münster (DE)**
- **WESSLING, Elisabeth**
  **48282 Emsdetten (DE)**
- **SCHWARZ, Joerg**
  **48163 Münster (DE)**
- **VIENENKÖTTER, Mechthild**
  **59387 Ascheberg (DE)**
- **WILM, Patrick**
  **59227 Ahlen (DE)**

(74) Vertreter: **BASF IP Association**
**BASF SE**
**G-FLP-C006**
**67056 Ludwigshafen (DE)**

(56) Entgegenhaltungen:
**WO-A1-2014/064020** **DE-A1- 10 106 566**
**DE-A1- 10 106 567**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 247 755 B1

## Beschreibung

Die vorliegende Erfindung betrifft wässrige Dispersionen enthaltend mehrstufig hergestellte Polymerisate von olefinisch ungesättigten Verbindungen, sowie deren Herstellung und Verwendung, insbesondere auf dem Gebiet der Automobillackierung.

## Stand der Technik

Aus dem Stand der Technik sind Polymere bekannt, die als Bindemittel für die Automobillackierung verwendet werden können. Ein solches Bindemittel muss eine Vielzahl von Eigenschaften erfüllen. So muss es in mehrschichtigen modernen Lackaufbauten, wie sie in der Automobilindustrie eingesetzt werden, verwendet werden können.

Aus dem Stand der Technik (vgl. z.B. die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist das folgende Verfahren bekannt, bei dem

(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird

und so ein mehrschichtiger Lackaufbau erhalten wird.

Dieses Verfahren wird beispielsweise in großem Umfang sowohl für die Erstlackierung (OEM) von Automobilen sowie der Lackierung von Metall- und Kunststoffanbauteilen eingesetzt.

Die so erhaltene mehrschichtige Lackierung muss eine Vielzahl von Eigenschaften erfüllen.

Kommt es zu Beschichtungsfehlern, werden die Karossen ein zweites Mal mit dem Basislack und Klarlack gemäß oben genannten Verfahren beschichtet. Hierbei kann bei der OEM-Automobilreparaturlackierung der gleiche Lack wie bei der ersten Beschichtung verwendet werden. Es kann allerdings auch ein Klarlack, der nicht bei hohen Temperaturen (etwa 140 °C), sondern schon bei deutlich niedrigeren Temperaturen (etwa 80 °C) aushärtet, verwendet werden. Die dabei resultierende Lackierung muss den hohen Ansprüchen der Automobilindustrie in Bezug auf Aussehen und Beständigkeit entsprechen, besonders die Haftung zwischen dem bei der Reparaturlackierung eingesetzten Basislack und der Erstlackierung kann problematisch sein.

Ein seit vielen Jahren im Stand der Technik bekanntes Polymer, welches bis heute hohe Relevanz als Bindemittel in der Automobilserienlackierung hat, ist ein aus der WO 92/15405 bekanntes Polyurethan. Dieses Bindemittel wird mit dem Zweck eingesetzt die Reparaturhaftung zu verbessern und kann deshalb als Referenz für Haftungseigenschaften dienen.

Hong, Kim, Kim und Park beschreiben in dem Korea Polymer Journal (Korea Polym. J., Vol. 7, No. 4, S. 213-222) mehrstufig aufgebaute Polymerisate zum Einsatz als Bindemittel in Metallic-Lackierungen. Diese werden über einen Prozess hergestellt, bei dem die erste Stufe des Polymerisats durch einen Batch-Prozess hergestellt wird und die zweite und dritte Stufe jeweils als verhungernde Polymerisation durchgeführt werden.

WO 2014/064020 A1 offenbart ein wasserdispergierbares Polymerpulver, welches ein wasserunlösliches Polymer und einen speziellen Triester enthält. Das Polymerpulver kann beispielsweise in Pulverklebstoffen, Tapetenklebstoffen oder Trockenmörteln verwendet werden.

DE 10106567 A1 betrifft wässrige Primärdispersionen, die dispergierte und/oder emulgierte, feste und/oder flüssige Polymerpartikel und/oder dispergierte feste Kern-Schale-Partikel eines Teilchendurchmessers $\leq$ 500 nm enthalten. Außerdem werden ein neues Verfahren zur Herstellung der neuen wässrigen Primärdispersionen durch die radikalische Mikro- und Miniemulsionspolymerisation sowie die Verwendung der Dispersion als Beschichtungsstoffe, Klebstoffe und Dichtungsmassen offenbart.

DE 10106566 A1 betrifft einen neuen, von flüchtigen organischen Stoffen im Wesentlichen oder völlig freien wässrigen Beschichtungsstoff sowie dessen Verwendung für die Automobilerstlackierung, die Lackierung von Bauwerken im Innen- und Außenbereich, die Lackierung von Türen, Fenstern und Möbeln, die industrielle Lackierung, inklusive Coil Coating, Container Coating und die Imprägnierung und/oder Beschichtung elektrotechnischer Bauteile, sowie die Lackierung von weißer Ware, inklusive Haushaltsgeräte, Heizkessel und Radiatoren.

## Aufgabe

Der vorliegenden Erfindung lag also die Aufgabe zugrunde, ein Polymerisat zur Verfügung zu stellen, mit Hilfe dessen sich Beschichtungen herstellen lassen, die die oben beschriebenen Probleme lösen.

Hierunter ist eine Haftungsverbesserung sowohl bei der Lackierung von Metall- und Kunststoffsubstraten als auch insbesondere bei der Autoreparaturlackierung zu verstehen, sowohl für den Fall von OEM-Klarlacken mit einer Einbrenntemperatur von in der Regel etwa 140°C, als auch für den Fall von Reparaturklarlacken mit einer Einbrenntemperatur von in der Regel etwa 80°C. Bei der Haftungsverbesserung steht die verbesserte Haftung zwischen Basislack und Erstlackierung im Vordergrund. Diese soll vor allem für den Einsatz in der OEM-Automobilreparaturlackierung verbessert werden.

Die Haftungsproblematik ist insbesondere dann eklatant, wenn die beschichteten Substrate der Witterung ausgesetzt sind. Die Aufgabe der vorliegenden Erfindung bestand somit auch darin, ein Polymerisat für Beschichtungen zur Verfügung zu stellen, die auch nachdem sie der Witterung ausgesetzt waren, noch hervorragende Haftungseigenschaften besitzen.

Nach Bewitterung treten oft weitere Probleme, insbesondere Blasen und Quellungen auf. Eine weitere Aufgabe der vorliegenden Erfindung bestand also ferner darin, dass Auftreten von Blasen und Quellungen zu verhindern oder zu reduzieren.

Neben den beschriebenen Haftverbesserungen lag der vorliegenden Erfindung die Aufgabe zugrunde, Polymerisate bereitzustellen, die beim Einsatz in Beschichtungsmitteln verbesserte Eigenschaften hinsichtlich der Lagerungsstabilität der Beschichtungsmittel verglichen mit dem Stand der Technik zeigen.

Eine weitere Aufgabe, die der vorliegenden Erfindung zugrunde lag, war es, ein Polymerisat bereitzustellen, das bei Einsatz in Beschichtungsmitteln die Anforderungen der Automobilserienlackierung hinsichtlich zu erreichendem Flop bei EffektLackierungen, hinsichtlich ausreichend hohem Festkörper zur Erlangung ausreichend hoher Schichtdicken, sowie hinsichtlich einer Viskosität, die eine Verarbeitung mittels elektrostatischer und/oder pneumatischer Applikation erlaubt, erfüllt.

**Lösung**

Es hat sich gezeigt, dass die oben beschriebenen Aufgaben durch eine wässrige Dispersion, enthaltend mindestens ein Polymerisat gelöst werden, welche herstellbar ist durch

i. Polymerisation einer Mischung von olefinisch ungesättigten Monomeren A durch Emulsionspolymerisation in Wasser unter Verwendung eines Emulgators und eines wasserlöslichen Initiators, wobei ein aus den Monomeren A hergestelltes Polymer eine Glasübergangstemperatur von 10 bis 55 °C hat,

ii. Polymerisation einer Mischung von olefinisch ungesättigten Monomeren B durch Emulsionspolymerisation in Wasser unter Verwendung eines Emulgators und eines wasserlöslichen Initiators in Gegenwart des unter i. erhaltenen Polymerisats, wobei

in der Reaktionslösung eine Konzentration der Monomere von 6,0 Gew.-% während der gesamten Reaktionsdauer nicht überschritten wird,

und die Mischung von olefinisch ungesättigten Monomeren B mindestens ein mehrfach olefinisch ungesättigtes Monomer enthält,

iii. Polymerisation einer Mischung von olefinisch ungesättigten Monomeren C durch Emulsionspolymerisation in Wasser unter Verwendung eines Emulgators und eines wasserlöslichen Initiators in Gegenwart des unter ii. erhaltenen Polymerisats, wobei

in der Reaktionslösung eine Konzentration der Monomere von 6,0 Gew.-%, während der gesamten Reaktionsdauer nicht überschritten wird,

iv. Einstellung des pH-Werts der Reaktionslösung auf einen pH-Wert von 7,5 bis 8,5,

dadurch gekennzeichnet, dass

a. die Mischung von olefinisch ungesättigten Monomeren A mindestens 50,0 Gew.-% eines oder mehrerer Monomere mit einer Löslichkeit in Wasser von < 0,5 g/l bei 25°C, enthält,

in der Reaktionslösung aus Stufe i. eine Konzentration der Monomere A von 6,0 Gew.-% nicht überschritten wird, und das resultierende Polymerisat nach der Stufe i. eine Teilchengröße von 20 bis 110 nm, hat,

b. ein aus den Monomeren B hergestelltes Polymer eine Glasübergangstemperatur von -35 bis 12 °C hat, und das resultierende Polymerisat nach der Stufe ii. eine Teilchengröße von 130 bis 200 nm hat,

c. ein aus den Monomeren C hergestelltes Polymer eine Glasübergangstemperatur von -50 bis 15 °C hat, und das resultierende Polymerisat nach der Stufe iii. eine Teilchengröße von 150 bis 280 nm hat.

Die neue wässrige Dispersion enthaltend mindestens ein Polymerisat wird in der Folge auch als erfindungsgemäße wässrige Dispersion bezeichnet. Bevorzugte Ausführungsformen der erfindungsgemäßen wässrigen Dispersion gehen aus der folgenden Beschreibung sowie den Unteransprüchen hervor.

Ebenfalls Gegenstand der vorliegenden Erfindung ist ein pigmentierter wässriger Basislack enthaltend die erfindungsgemäße wässrige Dispersion sowie die Verwendung der erfindungsgemäßen wässrigen Dispersion in wässrigen Basislacken zur Haftungsverbesserung. Nicht zuletzt betrifft die vorliegende Erfindung ein Verfahren zur Herstellung einer mehrschichtigen Lackierung auf einem Substrat sowie eine nach dem genannten Verfahren hergestellte Mehrschichtlackierung. Die vorliegende Erfindung betrifft auch ein Verfahren zur Reparatur von Fehlstellen von Mehrschichtlackierungen, bei dem der erfindungsgemäße Basislack eingesetzt wird.

Unter wässrig in Bezug auf die wässrigen Dispersionen ist eine Dispersion zu verstehen, die einen signifikanten Anteil Wasser enthält. Bevorzugt ist "wässrig" in diesem Zusammenhang im Rahmen der vorliegenden Erfindung so zu verstehen, dass die Dispersion einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 99 Gew.-%, insbesondere 50 bis 98 Gew.-%, ganz besonders bevorzugt 60 bis 95 Gew.-%, jeweils bezogen auf die Gesamtmenge der enthaltenen Lösemittel.

Der Begriff (Meth)acrylat soll im Folgenden sowohl Acrylat als auch Methacrylat bezeichnen.

Für Normen, beispielsweise DIN-Normen, für die keine Version bzw. kein Erscheinungsjahr explizit angegeben ist, gilt die am Einreichungstag gültige Version, oder sofern am Einreichungstag keine gültige Version existiert, die letzte gültige Version der Norm.

**Die wässrige Dispersion**

Die erfindungsgemäßen wässrigen Dispersionen werden durch mehrstufige radikalische Emulsionspolymerisation von olefinisch ungesättigten Monomeren in Wasser hergestellt.

Für die radikalische Emulsionspolymerisation wird ein Polymerisationsinitiator benötigt. Bei dem verwendeten Polymerisationsinitiator muss es sich um einen wasserlöslichen Initiator handeln. Bevorzugt wird ein Initiator ausgewählt aus der Liste Kalium-, Natrium- oder Ammoniumperoxodisulfat, Wasserstoffperoxid, tert.-Butylhydroperoxid, 2,2'-Azo-bis(2-amidoisopropan)dihydrochlorid, 2,2'-Azo- bis-(N,N'-dimethylenisobutyramidin)dihydrochlorid, 2,2'-Azo- bis-(4-cyanopentansäure) oder Mischungen der vorgenannten, z.B. Wasserstoffperoxid und Natriumpersulfat, und Redox-Initiatorsystemen verwendet.

Unter Redox-Initiatorsystemen sind solche Initiatoren zu verstehen, die mindestens eine peroxidhaltige Verbindung in Kombination mit einem Redox-Coinitiator z. B. reduzierend wirkenden Schwefelverbindungen, beispielsweise Bisulfite, Sulfite, Thiosulfate, Dithionite oder Tetrathionate von Alkalimetallen und Ammoniumverbindungen, Natriumhydroxymethansulfinat-Dihydrat und/oder Thioharnstoff, enthalten. So kann man Kombinationen von Peroxodisulfaten mit Alkalimetall- oder Ammoniumhydrogensulfiten einsetzen, z. B. Ammoniumperoxodisulfat und Ammoniumdisulfit. Das Gewichtsverhältnis von peroxidhaltigen Verbindungen zu den Redox-Coinitiatoren beträgt vorzugsweise 50 : 1 bis 0,05 : 1. In Kombination mit den Initiatoren bzw. den Redoxinitiatorsystemen können zusätzlich Übergangsmetallkatalysatoren eingesetzt werden, wie z. B. Eisen-, Nickel-, Kobalt-, Mangan-, Kupfer-, Vanadium, oder Chromsalze, wie Eisen-II-sulfat, Kobalt- II-chlorid, Nickel-II-sulfat, Kupfer-I-chlorid, Mangan-II-acetat, Vanadium-III-acetat, Mangan-II-chlorid. Bezogen auf die Monomere werden diese Übergangsmetallsalze üblicherweise in Mengen von 0,1 bis 1000 ppm eingesetzt. So kann man Kombinationen von Wasserstoffperoxid mit Eisen-II-Salzen einsetzen, wie beispielsweise 0,5 bis 30% Wasserstoffperoxid und 0,1 bis 500 ppm Mohrsches Salz.

Die Initiatoren werden bevorzugt in einer Menge von 0,05 bis 20 Gew.-%, bevorzugt 0,05 bis 10, besonders bevorzugt von 0,1 bis 5 Gew.-%, bezogen auf das Gesamtgewicht der eingesetzten Monomere der jeweiligen Stufe, eingesetzt.

Die Polymerisation wird zweckmäßigerweise bei einer Temperatur von 0 bis 160°C, vorzugsweise von 60 bis 95°C durchgeführt.

Dabei wird bevorzugt unter Ausschluss von Sauerstoff gearbeitet, vorzugsweise unter Inertgasatmosphäre. In der Regel wird die Polymerisation bei Normaldruck durchgeführt, jedoch ist auch die Anwendung von niedrigeren Drücken oder höheren Drücken möglich, insbesondere wenn Polymerisationstemperaturen angewendet werden, die oberhalb des Siedepunktes der Monomere und/oder Lösemittel liegen.

Einzelne Stufen der mehrstufigen Emulsionspolymerisation zur Herstellung der erfindungsgemäßen wässrigen Dispersionen müssen als so genannte "verhungernde Polymerisation" (auch als "starve feed", "starve fed" oder "starved feed"-Polymerisation bekannt) durchgeführt werden.

Als verhungernde Polymerisation im Sinne der vorliegenden Erfindung wird eine Emulsionspolymerisation angesehen, bei der der Gehalt an Restmonomeren in der Reaktionslösung während der gesamten Reaktionsdauer minimiert wird, das heißt die Zudosierung der olefinisch ungesättigten Monomere so erfolgt, dass in der Reaktionslösung eine Konzentration von 6,0 Gew.-%, bevorzugt 5,0 Gew.-%, besonders bevorzugt 4,0 Gew.-%, besonders vorteilhaft 3,5 Gew.-%, , während der gesamten Reaktionsdauer nicht überschritten wird. Darunter nochmals bevorzugt sind Konzentrationsbereiche der olefinisch ungesättigten Monomere von 0,01 bis 6,0 Gew.-%, bevorzugt 0,02 bis 5,0 Gew.-%,

besonders bevorzugt 0,03 bis 4,0 Gew.-%, insbesondere 0,05 bis 3,5 Gew.-%.Beispielsweise kann der höchste während der Reaktion zu detektierende Anteil (beziehungsweise die Konzentration) bei 0,5 Gew.-%, 1,0 Gew.-%, 1,5 Gew.-%, 2,0 Gew.-%, 2,5 Gew.-% oder 3,0 Gew.-% liegen, während alle weiteren detektierten Werte dann unterhalb der hier angegebenen Werte liegen.

Die Konzentration der Monomere in der Reaktionslösung kann dabei beispielsweise gaschromatographisch bestimmt werden:
Dabei wird die Probe nach Probenentnahme sofort mit flüssigem Stickstoff abgekühlt und mit 4-Methoxyphenol als Inhibitor versetzt. Im nächsten Schritt wird die Probe in Tetrahydrofuran gelöst und n-Pentan hinzugegeben. Der klare Überstand wird gaschromatographisch untersucht, wobei eine polare und eine unpolare Säule zur Bestimmung der Monomere eingesetzt werden und ein Flammenionisationsdetektor verwendet wird. Typische Parameter für die gaschromatographische Bestimmung sind die folgenden: 25m Silica-Kapillarsäule mit 5% Phenyl-, 1% vinyl-Methylpolysiloxan-Phase oder 30m Silica-Kapillarsäule mit 50% Phenyl 50% methylpolysiloxan-Phase, Trägergas Wasserstoff, Splitinjektor 150°C, Ofentemperatur 50 bis 180°C, Flammionisationsdetektor, Detektortemperatur 275°C, interner Standard Isobutylacrylat.

Die Bestimmung der Konzentration der Monomere erfolgt im Rahmen der vorliegenden Erfindung bevorzugt gaschromatographisch, insbesondere unter Einhaltung der oben genannten Parameter.

Die Konzentration der Monomere in der Reaktionslösung, im Folgenden als freie Monomere bezeichnet, kann auf verschiedene Art und Weisen gesteuert werden.

Eine Möglichkeit die Konzentration der freien Monomere gering zu halten ist es, die Dosiergeschwindigkeit der Mischung der olefinisch ungesättigten Monomere sehr niedrig zu wählen. Wenn die Zudosiergeschwindigkeit so niedrig ist, dass alle Monomere möglichst schnell reagieren können, sobald sie in der Reaktionslösung sind, kann sichergestellt werden, dass die Konzentration der freien Monomere minimiert wird.

Neben der Dosiergeschwindigkeit ist es wichtig, dass immer ausreichend Radikale in der Reaktionslösung vorhanden sind, so dass die zudosierten Monomere jeweils möglichst schnell zur Reaktion gebracht werden können, so dass weiteres Kettenwachstum garantiert ist und die Konzentration an freiem Monomer gering gehalten wird.

Dazu sind die Reaktionsbedingungen bevorzugt so zu wählen, dass mit dem Initiatorzulauf schon vor Beginn der Dosierung der olefinisch ungesättigten Monomeren begonnen wird.

Bevorzugt wird mit der Dosierung mindestens 5 Minuten vorher begonnen, besonders bevorzugt mindestens 10 Minuten vorher. Bevorzugt wird mindestens 10 Gew.-% des Initiators, besonders bevorzugt mindestens 20 Gew.-%, ganz besonders bevorzugt mindestes 30 Gew.-% des Initiators, jeweils bezogen auf die Gesamtmenge an Initiator, vor Beginn der Dosierung der olefinisch ungesättigten Monomeren zugegeben.

Es ist eine Temperatur zu wählen, die einen konstanten Zerfall des Initiators ermöglicht.

Die Initiatormenge ist ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden. Ein weiterer Faktor, der die Reaktionsgeschwindigkeit bestimmt, ist die Reaktivität der Monomere.

Die Kontrolle der Konzentration der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen dem Ziel, die Konzentration der freien Monomere unter den oben genannten Grenzen zu halten.

Zu jedem Zeitpunkt der Reaktion kann die Konzentration der freien Monomere gaschromatographisch, wie oben beschrieben, bestimmt werden.

Sollte bei dieser Analyse eine Konzentration an freien Monomeren bestimmt werden, die nah an den Grenzwert für die verhungernde Polymerisation kommt, z.B. aufgrund sehr wenig reaktiver olefinisch ungesättigter Monomere, können die oben genannten Parameter zur Steuerung der Reaktion genutzt werden. Es kann in diesem Fall beispielsweise die Dosiergeschwindigkeit der Monomere verringert oder die Menge an Initiator erhöht werden.

Über die kontrollierten Bedingungen der verhungernden Polymerisation ist eine genaue Steuerung der Morphologie und Teilchengröße des resultierenden Polymerisats möglich, indem bei erreichter Teilchengröße die Zudosierung der Monomere gestoppt wird.

Dabei kann zu jeder Zeit eine Probe der Reaktionslösung genommen werden und die Teilchengröße mittels dynamischer Lichtstreuung nach DIN ISO 13321 bestimmt werden.

Bevorzugt werden die im Rahmen dieser Erfindung angegebenen Teilchengrößen bestimmt mittels dynamischer Lichtstreuung nach DIN ISO 13321.

Für alle Stufen der Emulsionspolymerisationen werden Emulgatoren benötigt. Diese Emulgatoren werden bevorzugt in einer Menge von 0.1-10.0 Gew.-%, besonders bevorzugt 0.1-5.0 Gew.-%, ganz besonders bevorzugt 0.1-3.0 Gew.-%, jeweils bezogen auf das Gesamtgewicht der Monomeren der jeweiligen Stufe, eingesetzt.

Es können nichtionische oder ionische Emulgatoren, auch zwitterionische, gegebenenfalls auch Mischungen der vorgenannten, verwendet werden.

Bevorzugte Emulgatoren sind gegebenenfalls ethoxylierte oder propoxylierte Alkanole mit 10 bis 40 Kohlenstoffatomen und mit unterschiedlichen Ethoxylierungs- bzw. Propoxylierungsgraden (z.B. Addukte mit 0 bis 50 mol Alkylenoxid) bzw. deren neutralisierte, sulfatierte, sulfonierte oder phosphatierte Derivate.

Besonders bevorzugte Emulgatoren sind neutralisierte Dialkylsulfobernsteinsäureester oder Alkyldiphenyloxiddisulfonate geeignet, beispielsweise kommerziell erhältlich als EF-800 der Fa. Cytec.

Die Glasübergangstemperatur Tg wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N2) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cp) erreicht ist. Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

Alle im Folgenden angegebenen Werte für Glasübergangstemperaturen Tg beziehen sich auf das jeweilige Polymer, das gebildet wird wenn die jeweilige Monomerenmischung einzeln polymerisiert wird. Der für beispielsweise die dritte Stufe erhaltene Wert ist also derjenige, der erhalten wird wenn die Monomerenmischung für die dritte Stufe in Abwesenheit der ersten und zweiten Stufe polymerisiert wird.

Für eine zielführende Abschätzung der zu erwartenden Glasübergangstemperaturen kann die so genannte Fox-Gleichung verwendet werden: Fox Gleichung:

$$\frac{1}{T_g} = \frac{x_1}{T_{g1}} + \frac{x_2}{T_{g2}} + .. + \frac{x_n}{T_{gn}}$$

$T_g$: Glasübergangstemperatur des resultierenden Copolymers
(Kelvin) $x_1, x_2, .., x_n$: Gewichtsteil der Monomerkomponente 1, 2, ..., n
$T_{g1}, T_{g2}, .., T_{gn}$ Glasübergangstemperatur des Homopolymers der Monomerkomponente 1, 2, ..., n (Kelvin).

Da die Fox-Gleichung nur eine Näherung darstellt, die auf den Glasübergangstemperaturen der Homopolymere und deren Gewichtsteilen ohne Einbeziehung des Molekulargewichts basiert, kann diese nur als Hilfsmittel bzw. als zielführender Hinweis für den Fachmann bei der Synthese eingesetzt werden.

Relevant für die Beschreibung der vorliegenden Erfindung sind nur die wie oben beschriebenen gemessenen Werte für die Glasübergangstemperatur.

Bei allen im Folgenden angegebenen Säure- bzw. Hydroxylzahlen handelt es sich um auf Basis der Monomerzusammensetzungen berechnete Werte.

Geeignete olefinisch ungesättigte Monomere können einfach oder mehrfach olefinisch ungesättigt sein.

Beispiele geeigneter einfach olefinisch ungesättigter Monomere umfassen (meth)acrylat-basierte einfach olefinisch ungesättigte Monomere, vinylische, einfach olefinisch ungesättigte Monomere, alpha-beta ungesättigte Carbonsäuren und Allylverbindungen.

Bei den (meth)acrylat-basierten, einfach olefinisch ungesättigten Monomeren kann es sich beispielsweise um (Meth)acrylsäure und Ester, Nitrile, oder Amide der (Meth)acrylsäure handeln.

Bevorzugt sind Ester der (Meth)acrylsäure, mit einem Rest R, der nicht olefinisch ungesättigt ist.

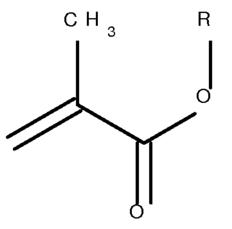

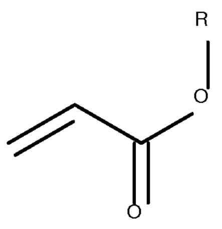

bzw.

Der Rest R kann aliphatisch oder aromatisch sein. Bevorzugt ist der Rest R aliphatisch. Der Rest R kann beispielsweise ein Alkylrest sein, oder Heteroatome enthalten. Beispiele für Reste R, die Heteroatome enthalten sind Ether. Bevorzugt werden jedenfalls, aber nicht zwingend ausschließlich, Monomere eingesetzt bei denen der Rest R ein Alkylrest ist.

Für den Fall, dass R ein Alkylrest ist, kann es sich um einen linearen, verzweigten oder cyclischen Alkylrest handeln. In allen drei Fällen kann es sich um unsubstituierte oder um mit funktionellen Gruppen substituierte Alkylreste handeln. Bevorzugt hat der Alkylrest 1 bis 20, besonders bevorzugt 1 bis 10 Kohlenstoffatome.

Besonders bevorzugt geeignete einfach ungesättigte Ester der (Meth)acrylsäure mit einem unsubstituierten Alkylrest sind Methyl(meth)acrylat, Ethyl(meth)acrylat, Propyl(meth)acrylat, Isopropyl(meth)acrylat, n-Butyl(meth)acrylat, Isobutyl(meth)-acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat, wobei n- und tert-Butyl(meth)acrylat und Methylmethacrylat ganz besonders bevorzugt sind.

Geeignete einfach ungesättigte Ester der (Meth)acrylsäure mit einem substituierten Alkylrest können bevorzugt mit einer oder mehreren Hydroxylgruppen oder mit Phosphorsäureestergruppen substitutiert sein.

Besonders bevorzugt geeignete einfach ungesättigte Ester der (Meth)acrylsäure mit einem mit einer oder mehreren Hydroxylgruppen substituierten Alkylrest sind 2-Hydroxyethyl(meth)acrylat, 2-Hydroxypropyl(meth)acrylat, 3-Hydroxypropyl (meth)acrylat, 3-Hydroxybutyl(meth)acrylat und 4-Hydroxybutyl(meth)acrylat, wobei 2-Hydroxyethyl(meth)acrylat ganz besonders bevorzugt ist.

Besonders bevorzugt geeignete einfach ungesättigte Ester der (Meth)acrylsäure mit Phosphorsäureestergruppen sind beispielsweise der Phosphorsäureester von Polypropyleneglycolmonomethacrylat, wie das kommerziell erhältliche Sipomer PAM 200 der Firma Rhodia.

Bei den vinylischen, einfach ungesättigten Monomeren kann es sich um Monomere mit einem Rest R' an der Vinylgruppe handeln, der nicht olefinisch ungesättigt ist.

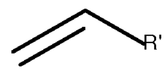

Der Rest R' kann aliphatisch oder aromatisch sein, wobei aromatische Reste bevorzugt sind.

Der Rest R' kann ein Kohlenwasserstoffrest sein oder Heteroatome enthalten. Beispiele für Reste R', die Heteroatome enthalten sind Ether, Ester, Amide, Nitrile und Heterocyclen. Bevorzugt handelt es sich beim Rest R' um einen Kohlenwasserstoffrest. Für den Fall, dass es sich bei R' um einen Kohlenwasserstoffrest handelt, kann dieser mit Heteroatomen substituiert oder unsubstituiert sein, wobei unsubstituierte Reste bevorzugt sind. Bevorzugt ist der Rest R' ein aromatischer Kohlenwasserstoffrest.

Besonders bevorzugte vinylische, olefinisch ungesättigte Monomere sind vinylaromatische Kohlenwasserstoffe, insbesondere Vinyltoluol, alpha-Methylstyrol und insbesondere Styrol.

Wenn Heteroatome enthalten sind, sind olefinisch ungesättigte Monomere, wie Acrylnitril, Methacrylnitril, Acrylamid, Methacrylamid, N-Dimethylacrylamid, Vinylacetat, Vinylpropionat, Vinylchlorid, N-Vinylpyrrolidon, N-Vinylcaprolactam, N-Vinylformamid, N-Vinylimidazol und N-Vinyl-2-methylimidazolin bevorzugt.

Bevorzugt kann der Rest R' die folgende Struktur haben:

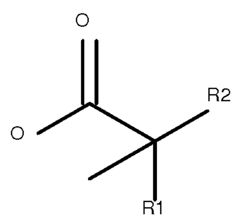

Wobei die Reste R1 und R2 Alkylreste mit insgesamt 7 Kohlenstoffatomen sind. Solche Monomere sind unter dem Namen VeoVa 10 bei der Firma Momentive kommerziell erhältlich.

Beispiele geeigneter mehrfach olefinisch ungesättigter Monomere umfassen Ester der (Meth)acrylsäure mit einem olefinisch ungesättigten Rest R" und Allylether von mono- oder mehrwertigen Alkoholen. Bei dem Rest R" kann es sich um einen Allylrest handeln oder um einen (Meth)acrylsäurerest.

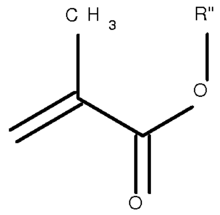

bzw.

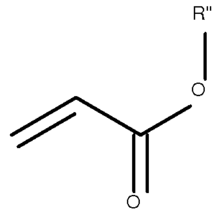

Bevorzugte mehrfach olefinisch ungesättigte Monomere umfassen Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykoldi(meth)acrylat, Tripropylenglykoldi(meth)acrylat, Hexandioldi(meth)acrylat und Allyl(meth)acrylat.

Darüber hinaus umfassen bevorzugte mehrfach olefinisch ungesättigte Verbindungen Acrylsäure- und Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylatdiallylether, Pentaerythrittri(meth)acrylatmonoallylether, Pentaerythritdi(meth)acrylatdiallylether, Pentaerythrit(meth)acrylattriallylether, Triallylsaccharose, und Pentaallylsaccharose.

Besonders bevorzugt wird Hexandioldi(meth)acrylat und/oder Allylmethcrylat eingesetzt ganz besonders bevorzugt eine Kombination von Hexandioldi(meth)acrylat und Allylmethacrylat.

Die Löslichkeit der organischen Monomere in Wasser kann über eine Gleichgewichtseinstellung mit dem Gasraum oberhalb der wässrigen Phase bestimmt werden (analog der Literatur X.-S. Chai, Q.X. Hou, F.J. Schork, Journal of Applied Polymer Science Vol. 99, 1296-1301 (2006)).

Dazu werden in einem 20ml Gasraumprobenröhrchen zu einem definierten Volumen an Wasser, bevorzugt 2 ml, ein Überschuss in Bezug auf die Löslichkeit des zu bestimmenden Monomers und ein Zusatz von 10 ppm eines Emulgators gegeben. Um die Gleichgewichtskonzentration zu erhalten, wird die Mischung ständig geschüttelt. Die überstehende Gasphase wird gegen Inertgas ausgetauscht, so dass sich wieder ein Gleichgewicht einstellt. In der entnommenen Gasphase wird jeweils der Anteil der zu detektieren Substanz gemessen (bevorzugt mittels Gaschromatographie). Die Gleichgewichtskonzentration in Wasser kann bestimmt werden, indem der Anteil des Monomers in der Gasphase graphisch ausgewertet wird. Die Steigung der Kurve ändert sich von einem nahezu konstanten Wert (S1) zu einer signifikant negativen Steigung (S2) sobald der überschüssige Monomeranteil aus der Mischung entfernt wurde. Die Gleichgewichtskonzentration ist dabei an dem Schnittpunkt der Geraden mit der Steigung S1 und der Geraden mit der Steigung S2 erreicht.

Bevorzugt wird die beschriebene Bestimmung bei 25°C durchgeführt.

Stufe i. der Herstellung der erfindungsgemäßen wässrigen Dispersionen ist die Umsetzung einer Mischung von olefinisch ungesättigten Monomeren A durch Emulsionspolymerisation in Wasser unter Verwendung eines Emulgators und eines wasserlöslichen Initiators, wobei die Zudosierung der Mischung von olefinisch ungesättigten Monomeren A so erfolgt, dass in der Reaktionslösung eine Konzentration der Monomere von 6,0 Gew.-%, bevorzugt 5,0 Gew.-%, besonders bevorzugt 4,0 Gew.-%, während der gesamten Reaktionsdauer nicht überschritten wird, also die Reaktionsbedingungen für eine verhungernde Polymerisation eingehalten werden.

Das resultierende Polymerisat aus Stufe i. wird im Folgenden als Saat bezeichnet. Die Gesamtmasse der Monomermischung A hat dabei bevorzugt einen Anteil von 1.0 bis 10.0 % besonders bevorzugt 2,0 bis 6,0 %, bezogen auf die Gesamtmasse der Monomermischungen A, B und C.

Die Mischung von olefinisch ungesättigten Monomeren A wird dabei so ausgewählt, dass das resultierende Polymerisat eine Glasübergangstemperatur Tg von 10 bis 55°C, bevorzugt von 30 bis 50°C hat.

Die Mischung von olefinisch ungesättigten Monomeren A enthält mindestens 50,0 Gew.-%, bevorzugt mindestens 55,0 Gew.-% bezogen auf die Gesamtmasse der Mischung von olefinisch ungesättigten Monomeren A, eines oder mehrere Monomere mit einer Löslichkeit in Wasser bei einer Temperatur von 25°C von < 0,5 g/l. Bevorzugt handelt es

sich bei den Monomeren mit einer Löslichkeit in Wasser bei einer Temperatur von 25°C von < 0,5 g/l um Styrol.

Die Reaktionsbedindungen für die Polymerisation werden so gewählt, dass das resultierende Polymerisat nach der Stufe i. eine Teilchengröße von 20 bis 110 nm, hat.

Bevorzugt enthält die Monomerenmischung A keine hydroxyfunktionellen Monomere.

Bevorzugt enthält die Monomerenmischung A keine säurefunktionellen Monomere.

In einer besonders bevorzugten Ausführungsform enthält die Monomermischung A mindestens einen einfach ungesättigten Ester der (Meth)acrylsäure mit einem unsubstituierten Alkylrest und mindestens ein vinylisch, einfach ungesättigtes Monomer mit einem aromatischen Rest an der Vinylgruppe.

Stufe ii. der Herstellung der erfindungsgemäßen wässrigen Dispersionen ist die Umsetzung einer Mischung von olefinisch ungesättigten Monomeren B durch Emulsionspolymerisation in Wasser unter Verwendung eines Emulgators und eines wasserlöslichen Initiators in Gegenwart des unter i. erhaltenen Polymerisats, der Saat, wobei die Zudosierung der Mischung von olefinisch ungesättigten Monomeren B so erfolgt, dass in der Reaktionslösung eine Konzentration der Monomere von 6,0 Gew.-%, bevorzugt 5,0 Gew.-%, besonders bevorzugt 4,0 Gew.-%, während der gesamten Reaktionsdauer nicht überschritten wird, also die Reaktionsbedingungen für eine verhungernde Polymerisation eingehalten werden.

Das aus der Mischung von olefinisch ungesättigten Monomeren B resultierende Polymerisat wird im Folgenden als Kern bezeichnet. Das Gesamtergebnis, also das resultierende Polymerisat nach der Stufe (ii.) ist also eine Kombination von Saat und Kern.

Die Gesamtmasse der Monomermischung B hat dabei bevorzugt einen Anteil von 60 bis 90 %, besonders bevorzugt 70 bis 80 %, ganz besonders bevorzugt von 71 bis 77 % bezogen auf die Gesamtmasse der Monomermischungen A, B und C.

Die Mischung von olefinisch ungesättigten Monomeren B wird dabei so ausgewählt, dass ein aus den Monomeren B hergestelltes Polymerisat eine Glasübergangstemperatur Tg von -35 bis +12°C, bevorzugt von -25 bis +7°C hat. Die Reaktionsbedingungen für die Polymerisation werden so gewählt, dass das resultierende Polymerisat nach der Stufe ii., also Saat und Kern, eine Teilchengröße von 130 bis 200 nm, hat.

Die Monomerenmischung B enthält mindestens ein mehrfach olefinisch ungesättigtes Monomer.

Bevorzugt enthält die Monomerenmischung B keine säurefunktionellen Monomere.

Bevorzugt enthält die Monomerenmischung B keine hydroxyfunktionellen Monomere.

In einer bevorzugten Ausführungsform enthält die Monomermischung B mindestens ein mehrfach olefinisch ungesättigtes Monomer, mindestens einen einfach ungesättigten Ester der (Meth)acrylsäure mit einem unsubstituierten Alkylrest, und mindestens ein vinylisch, einfach ungesättigtes Monomer mit einem aromatischen Rest an der Vinylgruppe.

Stufe iii. der Herstellung der erfindungsgemäßen wässrigen Dispersionen ist die Umsetzung einer Mischung von olefinisch ungesättigten Monomeren C durch Emulsionspolymerisation in Wasser unter Verwendung eines Emulgators und eines wasserlöslichen Initiators in Gegenwart des unter ii. erhaltenen Polymerisats, bestehend aus Saat und Kern, wobei die Zudosierung der Mischung von olefinisch ungesättigten Monomeren C so erfolgt, dass in der Reaktionslösung eine Konzentration der Monomere von 6,0 Gew.-%, bevorzugt 5,0 Gew.-%, besonders bevorzugt 4,0 Gew.-%, während der gesamten Reaktionsdauer nicht überschritten wird, also die Reaktionsbedingungen für eine verhungernde Polymerisation eingehalten werden.

Das aus der Mischung von olefinisch ungesättigten Monomeren C resultierende Polymerisat wird im Folgenden als Schale bezeichnet. Das Gesamtergebnis, also das resultierende Polymer nach der Stufe (iii.) ist also eine Kombination von Saat, Kern und Schale. Das gesamte mehrstufige Polymerisat wird auch als Saat-Kern-Schale-Polymerisat bezeichnet.

Die Gesamtmasse der Monomermischung C hat dabei bevorzugt einen Anteil 10 bis 30 %, besonders bevorzugt von 18 bis 24 %, bezogen auf die Gesamtmasse der Monomermischungen A, B und C.

Die Mischung von olefinisch ungesättigten Monomeren C wird dabei so ausgewählt, dass ein aus den Monomeren C hergestelltes Polymerisat eine Glasübergangstemperatur Tg, von -50 bis 15°C, bevorzugt von -20 bis +12°C hat.

Die Mischung von olefinisch ungesättigten Monomeren C wird dabei bevorzugt so ausgewählt, dass das resultierende Polymerisat, bestehend aus Saat, Kern und Schale, eine Säurezahl von 10 bis 25 hat.

Bevorzugt erfolgt die Auswahl der Monomere für die Mischung von olefinisch ungesättigten Monomeren C dabei so, dass das resultierende Polymerisat, bestehend aus Saat, Kern und Schale, eine OH-Zahl von 0 bis 30, besonders bevorzugt von 10 bis 25 hat.

Die Reaktionsbedingungen für die Polymerisation werden so gewählt, dass das resultierende Polymerisat nach der Stufe iii. eine Teilchengröße von 150 bis 280 nm hat.

In einer bevorzugten Ausführungsform enthält die Monomerenmischung C mindestens eine alpha-beta ungesättigte Carbonsäure.

In einer besonders bevorzugten Ausführungsform enthält die Monomermischung C mindestens eine alpha-beta ungesättigte Carbonsäure und mindestens einen einfach ungesättigten Ester der (Meth)acrylsäure mit einem mit einer oder mehreren Hydroxylgruppen substituierten Alkylrest.

In einer ganz besonders bevorzugten Ausführungsform enthält die Monomermischung C mindestens eine alpha-beta ungesättigte Carbonsäure, mindestens einen einfach ungesättigten Ester der (Meth)acrylsäure mit einem mit einer oder mehreren Hydroxylgruppen substituierten Alkylrest und mindestens einen einfach ungesättigten Ester der (Meth)acrylsäure mit einem unsubstituierten Alkylrest.

In einer bevorzugten Ausführungsform beträgt die Masse der Monomerenmischung A, bezogen auf die Gesamtmasse der Monomerenmischungen A, B, und C, 1 bis 10%, die Masse der Monomerenmischung B, bezogen auf die Gesamtmasse der Monomerenmischungen A, B, und C, 60 bis 80 %, und die Masse der Monomerenmischung C, bezogen auf die Gesamtmasse der Monomerenmischungen A, B, und C, 10 bis 30 %.

In einer besonders bevorzugten Ausführungsform beträgt die Masse der Monomerenmischung A, bezogen auf die Gesamtmasse der Monomerenmischungen A, B, und C, 2 bis 6 %, die Masse der Monomerenmischung B, bezogen auf die Gesamtmasse der Monomerenmischungen A, B, und C, 71 bis 77 %, und die Masse der Monomerenmischung C, bezogen auf die Gesamtmasse der Monomerenmischungen A, B, und C, 18 bis 24 %.

Stufe iv. der Herstellung der erfindungsgemäßen wässrigen Dispersionen eines Polymerisats ist die Neutralisation der Reaktionslösung. Unter Neutralisation ist die Einstellung auf einen pH-Wert von 7,5 bis 8,5 durch Zugabe einer Base, bevorzugt eines Amins zu verstehen.

Dabei wird die Messung des pH-Wertes bevorzugt mit einem pH-Meter (beispielsweise Mettler-Toledo S20 SevenEasy pH Meter) mit einer kombinierten pH-Elektrode (beispielsweise Mettler-Toledo InLab® Routine) durchgeführt.

Besonders bevorzugt wird N,N-Dimethylethanolamin (DMEA) zur Neutralisation eingesetzt.

Bevorzugt haben die Polymerisate nach der Neutralisation eine Teilchengröße (z-Mittel) von 100 bis 400, besonders bevorzugt von 220 bis 330 nm.

Die OH-Zahl der Polymerisate beträgt bevorzugt zwischen 0 und 200 mg/gKOH.

Unter Festkörpergehalt bzw. Festkörper ist derjenige Gewichtsanteil zu versehen, der unter festgelegten Bedingungen beim Eindampfen als Rückstand verbleibt. Der Festkörper wird nach DIN EN ISO 3251 bei 130°C, 60 min, Einwaage 1,0 g, bestimmt.

Der Gelanteil der erfindungsgemäßen wässrigen Dispersion beträgt bevorzugt mindestens 70 Gew.-%, besonders bevorzugt mindestens 80 Gew.-%, jeweils bezogen auf den Festkörper der Dispersion.

Der Gelanteil kann gravimetrisch bestimmt werden, indem die Dispersion zentrifugiert wird. Dazu wird die Dispersion mit Tetrahydrofuran verdünnt und der unlösliche Anteil mittels einer Ultrazentrifuge abgetrennt. Im Anschluss wird der getrocknete, unlösliche Anteil gewogen und der Quotient mit dem gesamten Festkörper der Dispersion gebildet. Der erhaltene Wert entspricht dem Gelanteil.

**Der pigmentierte wässrige Basislack**

Die vorliegende Erfindung betrifft ferner einen pigmentierten wässrigen Basislack, welcher mindestens eine erfindungsgemäße wässrige Dispersion enthält.

Unter einem Basislack ist ein in der Automobillackierung und allgemeinen Industrielackierung eingesetzter farbgebender Zwischenbeschichtungsstoff zu verstehen. Dieser wird im Allgemeinen auf einem mit Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Um eine Basislackschicht insbesondere gegen Umwelteinflüsse zu schützen, wird auf dieser mindestens noch eine zusätzliche Klarlackschicht appliziert.

Die Summe über die gewichtsprozentualen Anteile aller in den erfindungsgemäßen wässrigen Dispersionen enthaltenen Saat-Kern-Schale-Polymerisate, bezogen auf das Gesamtgewicht des pigmentierten wässrigen Basislacks, beträgt bevorzugt 0,1 bis 30 Gew.-%, besonders bevorzugt 1 bis 20 Gew.-% und ganz besonders bevorzugt 1,5 bis 15 Gew.-% oder sogar 2 bis 12 Gew.-%.

Im Falle einer möglichen Spezifizierung auf Basislacke enthaltend bevorzugte Komponenten in einem speziellen Anteilsbereich gilt folgendes. Die Komponenten, die nicht in die bevorzugte Gruppe fallen, können selbstverständlich weiterhin im Basislack enthalten sein. Der spezielle Anteilsbereich gilt dann nur für die bevorzugte Gruppe von Komponenten. Bevorzugt ist allerdings, dass für den Gesamtanteil von Komponenten bestehend aus Komponenten aus der bevorzugten Gruppe und Komponenten, die nicht in die bevorzugte Gruppe fallen, ebenfalls der spezielle Anteilsbereich gilt.

Würde also eine Beschränkung auf einen Anteilsbereich von 1,5 bis 15 Gew.-% und eine bevorzugte Gruppe von Komponenten durchgeführt werden, so gilt dieser Anteilsbereich augenscheinlich zunächst nur für die bevorzugte Gruppe an Komponenten. Bevorzugt wäre dann aber, dass insgesamt von allen ursprünglich umfassten Komponenten bestehend aus Komponenten aus der bevorzugten Gruppe und Komponenten, die nicht in die bevorzugte Gruppe fallen, ebenfalls von 1,5 bis 15 Gew.-% enthalten sind. Werden also 5 Gew.-% von Komponenten der bevorzugten Gruppe eingesetzt, so können höchstens 10 Gew.-% der Komponenten der nicht bevorzugten Gruppe eingesetzt werden.

Das genannte Prinzip gilt im Rahmen der vorliegenden Erfindung für alle genannten Komponenten des Basislacks und deren Anteilsbereiche, beispielsweise die erfindungsgemäßen wässrigen Dispersionen, Pigmente, die Polyurethanharze als Bindemittel oder auch die Vernetzungsmittel wie Melaminharze.

Der wässrige Basislack enthält in der Regel farbgebende Pigmente und/oder optisch effektgebende Pigmente.

Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben.

Effektpigmente sind beispielsweise Metalleffektpigmente wie z.B. Aluminiumpigmente, Goldbronzen, feuergefärbte Bronzen und/oder Eisenoxid-Aluminiumpigmente, Perglanzpigmente wie z.B. Fischsilber, basisches Bleicarbonat, Bismutoxidchlorid und/oder Metalloxid-Glimmer-Pigmente und/oder sonstige Effektpigmente wie z.B. mikronisiertes Titandioxid, blättchenförmiges Graphit, blättchenförmiges Eisenoxid, Mehrschicht-Effekt-Pigmente aus PVD-Filmen und/oder Liquid Crystal Polymer-Pigmente.

Der Anteil der Pigmente kann beispielsweise im Bereich von 1 bis 40 Gew.-%, bevorzugt 2 bis 20 Gew.-%, besonders bevorzugt 5 bis 15 Gew.-%, bezogen auf das Gesamtgewicht des pigmentierten wässrigen Basislacks, liegen.

Im erfindungsgemäßen Basislack können physikalisch, thermisch oder thermisch und mit aktinischer Strahlung härtbare Bindemittel enthalten sein.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Hitze initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischer Strahlung gemeinsam angewandt, spricht man auch von "Dual Cure".

In der vorliegenden Erfindung sind Basislacke bevorzugt, die thermisch oder thermisch und mit aktinischer Strahlung, also mittels "Dual Cure", härtbar sind.

Insbesondere sind solche Basislacke bevorzugt, die als Bindemittel ein Polyacrylatharz und als Vernetzungsmittel ein Aminoplastharz oder ein blockiertes oder unblockiertes Polyisocyanat, bevorzugt ein Aminoplasthatz, enthalten. Unter den Aminoplastharzen sind insbesondere Melaminharze bevorzugt.

Bevorzugt enthalten die erfindungsgemäßen Basislacke zusätzlich zu der erfindungsgemäßen wässrigen Dispersion ein weiteres Bindemittel, bevorzugt ein Polyurethanharz.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz kann dabei neben dem aus der Polymerisation der olefinisch ungesättigten Monomere hervorgegangenen Polymer vorliegen ohne dass diese kovalent miteinander verbunden sind. Ebenso kann das Polyurethanharz aber auch mit dem aus der Polymerisation der olefinisch ungesättigten Monomere hervorgegangenen Polymer kovalent verbunden sein. Bei den olefinisch ungesättigten Monomeren handelt es sich bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in

- der deutschen Patentanmeldung DE 199 14 896 A1, Spalte 1, Zeilen 29 bis 49 und Spalte 4, Zeile 23 bis Spalte 11, Zeile 5,

- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.
- der deutschen Patentanmeldung DE 4437535 A1, Seite 7, Zeile 55 bis Seite 8, Zeile 23
- der internationalen Patentanmeldung WO 91/15528 Seite 23, Zeile 29 bis Seite 24, Zeile 24.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol eingesetzt.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um

- funktionelle Gruppen, die durch Neutralisationsmittel und/oder Quaternisierungsmittel in Kationen überführt werden können, und/oder kationische Gruppen (kationische Modifizierung)
  oder
- funktionelle Gruppen, die durch Neutralisationsmittel in Anionen überführt werden können, und/oder anionische Gruppen (anionische Modifizierung)
  und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens

eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:

- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, so dass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle

Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polyaddition von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethanharz besitzt vorzugsweise ein zahlenmittleres Molekulargewicht von 200 bis 30000 g/mol, bevorzugt von 2000 bis 20000 g/mol. Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird im Rahmen der vorliegenden Erfindung nach DIN 53240, die Säurezahl gemäß DIN 53402 bestimmt.

Der erfindungsgemäße wässrige Basislack kann zudem mindestens einen Polyester, insbesondere einen Polyester mit einem zahlenmittleren Molekulargewicht von 400 bis 5000 g/mol als Bindemittel enthalten. Entsprechende Polyester werden beispielsweise in DE 4009858 in Spalte 6, Zeile 53 bis Spalte 7, Zeile 61 und Spalte 10, Zeile 24 bis Spalte 13, Zeile 3 beschrieben.

Bevorzugt ist zudem mindestens ein Verdicker enthalten. Als Verdicker eignen sich anorganische Verdicker aus der Gruppe der Schichtsilikate. Besonders geeignet sind Lithium-Aluminium-Magnesium Silikate.

Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Rheovis® AS 1130 (BASF SE) und Polyurethanverdickern, wie beispielsweise dem Handelsprodukt Rheovis® PU1250 der Firma BASF SE. Als (Meth)acrylsäure-(Meth)acrylat-Copolymerisat-Verdicker werden solche bezeichnet, die neben Acrylsäure und/oder Methacrylsäure auch ein oder mehrere Acrylsäureester (das heißt Acrylate) und/oder ein oder mehrere Methacrylsäureester (das heißt Methacrylate) einpolymerisiert enthalten. Den (Meth)acrylsäure-(Meth)acrylat-Copolymerisat-Verdickern gemein ist, dass diese in alkalischem Medium, das heißt bei pH-Werten > 7, insbesondere > 7,5 durch Salzbildung der Acrylsäure und/oder Methacrylsäure, das heißt durch die Bildung von Carboxylatgruppen einen starken Viskositätsanstieg zeigen. Werden (Meth)acrylsäureester eingesetzt, die aus (Meth)acrylsäure und einem $C_1$-$C_6$-Alkanol gebildet werden, so erhält man im wesentlichen nicht-assoziativ wirkende (Meth)acrylsäure-(Meth)acrylat-Copolymerisat-Verdicker, wie beispielsweise das oben genannte Rheovis AS 1130. Im Wesentlichen nicht-assoziativ wirkende (Meth)acrylsäure-(Meth)acrylat-Copolymerisat-Verdicker werden in der Literatur auch als ASE-Verdicker ("Alkali Soluble/Swellable Emulsion", alkalisch lösliche/quellbare Emulsion oder Dispersion) bezeichnet. Als (Meth)acrylsäure-(Meth)acrylatCopolymerisat-Verdicker sind jedoch auch sogenannte HASE-Verdicker ("Hydrophobically Modified Anionic Soluble Emulsions", hydrophob modifizierte anionisch lösliche Emulsion oder Dispersion) einsetzbar. Diese werden erhalten, wenn als Alkanol anstelle oder zusätzlich zu den $C_1$-$C_6$-Alkanolen solche mit einer größeren Anzahl an Kohlenstoffatomen, beispielsweise 7 bis 30, oder 8 bis 20 Kohlenstoffatomen eingesetzt werden. HASE-Verdicker wirken im Wesentlichen assoziativ verdickend. Die einsetzbaren (Meth)acrylsäure-(Meth)acrylat-Copolymerisat-Verdicker eignen sich aufgrund ihrer verdickenden Eigenschaften nicht als Bindemittel-Harze, sie fallen somit nicht unter die als Bindemittel bezeichneten physikalisch, thermisch oder thermisch und aktinisch härtbaren Bindemitteln und sind somit explizit verschieden von den Poly(meth)acrylat basierten Bindemitteln, die in den erfindungsgemäßen Basislackzusammensetzungen eingesetzt werden können. Als Polyurethanverdicker sind die in der Literatur als HEUR ("Hydrophobically Modified Ethylene Oxide Urethane Rheology Modifiers", hydrophob modifizierte Ethylenoxid-Urethan-Rheologieadditive) bezeichneten, assoziativ wirkenden Verdicker zu verstehen. Chemisch handelt es sich hierbei um nichtionische verzweigte oder unverzweigte Blockcopolymere aus Polyethylenoxid-Ketten (manchmal auch Polypropylenoxid-Ketten), die über Urethanbindungen miteinander verknüpft sind und die endständige langkettige Alkyl- oder Alkylengruppen mit 8 bis 30 Kohlenstoffatomen tragen. Typische Alkylgruppen sind beispielsweise Dodecyl- oder Stearyl-Gruppen, eine typische Alkenylgruppe ist beispielsweise eine Oleylgruppe, eine typische Arylgruppe ist die Phenylgruppe und eine typische alkylierte Arylgruppe ist beispielsweise eine Nonylphenylgruppe. Die Polyurethan-Verdicker eignen sich aufgrund ihrer verdickenden Eigenschaften und Struktur nicht als physikalisch, thermisch oder thermisch und physikalisch härtbare Bindemittel-Harze. Sie sind somit explizit verschieden von den Polyurethanen, die in den erfindungsgemäßen Basislack-Zusammensetzungen als Bindemittel eingesetzt werden können.

Darüber hinaus kann der wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus

- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],

bekannt. Sie werden in den üblichen und bekannten Mengen eingesetzt.

Der Festkörpergehalt der erfindungsgemäßen Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 10 bis 65 Gew.-% und insbesondere bevorzugt bei 15 bis 60 Gew.-%.

Unter Festkörpergehalt ist derjenige Gewichtsanteil zu versehen, der unter festgelegten Bedingungen beim Eindampfen als Rückstand verbleibt. Der Festkörper wird nach DIN EN ISO 3251 bei 130°C, 60 min, Einwaage 1,0 g, bestimmt.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung in Bezug auf Beschichtungsmittel so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Die Herstellung der erfindungsgemäß eingesetzten Basislacke kann unter Einsatz der für die Herstellung von Basislacken üblichen und bekannten Mischverfahren und Mischaggregate erfolgen.

**Das erfindungsgemäße Verfahren und die erfindungsgemäße Mehrschichtlackierung**

Ein weiterer Aspekt der vorliegenden Erfindung ist ein Verfahren zur Herstellung einer mehrschichtigen Lackierung, bei dem

(1) ein pigmentierter wässriger Basislack auf ein Substrat aufgebracht wird,

(2) aus dem in Stufe (1) aufgebrachten Lack ein Polymerfilm gebildet wird,

(3) auf die so erhaltene Basislackschicht ein Klarlack aufgebracht wird und anschließend

(4) die Basislackschicht zusammen mit der Klarlackschicht gehärtet wird,

welches dadurch gekennzeichnet ist, dass in Stufe (1) ein pigmentierter wässriger Basislack eingesetzt wird, welcher mindestens eine erfindungsgemäße wässrige Dispersion enthält. Alle vorstehend genannten Ausführungen hinsichtlich der erfindungsgemäßen Dispersion und des pigmentierten wässrigen Basislacks gelten auch für das erfindungsgemäße Verfahren. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäßen pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Wird ein Kunststoffsubstrat beschichtet, so wird dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen pigmentierten wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit

Heißspritzapplikation wie zum Beispiel Hot-Air-Heißspritzen.

Nach der Applikation des pigmentierten wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als Vernetzungsmittel ein Aminoplastharz oder ein blockiertes oder unblockiertes Polyisocyanat, bevorzugt ein Aminoplasthatz, enthalten. Unter den Aminoplastharzen sind Melaminharze bevorzugt.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen Polymerisats, des pigmentierten wässrigen Basislacks und des erfindungsgemäßen Verfahrens gelten entsprechend auch für die besagte Mehrschichtlackierung. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt. Bei dieser Substrat-Mehrschichtlackierung, welche Fehlstellen besitzt, handelt es sich also um eine Originallackierung, welche ausgebessert oder komplett überlackiert werden soll.

Das erfindungsgemäße Verfahren eignet sich demnach zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235,"Filmfehler" beschrieben.

In einer bevorzugten Ausführungsform des erfindungsgemäßen Verfahrens handelt es sich bei dem Substrat aus Stufe (1) um eine Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse komplett überlackiert (Doppellackierung), sondern nur der sogenannte "Spot" repariert. Letzterer Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen (Originallackierungen) in der OEM-Automobilreparaturlackierung.

Sofern im Rahmen der vorliegenden Erfindung der Bereich der Automobilreparaturlackierung angesprochen ist, das heißt also von der Ausbesserung von Fehlstellen die Rede ist, und dabei als Substrat eine Mehrschichtlackierung, welche Fehlstellen besitzt, genannt wird, ist hiermit selbstverständlich gemeint, dass diese Substrat-Mehrschichtlackierung mit Fehlstellen (Originallackierung) in der Regel auf einem wie oben beschriebenen Metallsubstrat oder einem Kunststoffsubstrat angeordnet ist.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, der zur Herstellung der Substrat-Mehrschichtlackierung mit Fehlstellen (Originallackierung) eingesetzt wurde.

Die vorstehend genannten Ausführungen bezüglich des erfindungsgemäßen Polymerisats und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Bevorzugt wird das Anschleifen so ausgeführt, dass von der Originallackierung nur die Basislackierung und die Klarlackierung ab- oder angeschliffen werden, nicht aber die in der Regel darunter angeordnete Füllerschicht und Grundierungsschicht abgeschliffen wird. Auf diese Weise kann bei der Reparatur insbesondere auf die erneute Applikation von speziellen Grundierungen und Grundierfüllern verzichtet werden. Diese Form des Anschleifens hat sich insbesondere im Bereich der OEM-Automobilreparaturlackierung bewährt, da hier im Gegensatz zur Reparatur in einer Werkstatt in der Regel nur Fehlstellen im Schichtbereich Basislack und/oder Klarlack auftreten, jedoch insbesondere keine Fehlstellen im Bereich der darunter angeordneten Füller- und Grundierungsschichten auftreten. Fehlstellen in den letztgenannten Schichten sind eher im Bereich der Reparatur in Werkstätten anzutreffen. Beispielhaft seien Lackschäden wie Kratzer genannt, welche beispielsweise durch mechanische Einflüsse erzeugt werden und oft bis auf die Substratoberfläche (Metall- oder Kunststoffsubstrat) reichen.

Nach dem Anschleifen erfolgt die Applikation des pigmentierten wässrigen Basislacks auf die Fehlstelle in der Originallackierung in der Regel durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der als Vernetzungsmittel ein Aminoplastharz, bevorzugt ein Melaminharz und ein mit diesem Vernetzungsmittel reaktives Bindemittel, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben als Vernetzungsmittel ein Aminoplastharz eingesetzt, so kommt es bei diesen Temperaturen in der Basislackschicht zu einer Vernetzung durch das Aminoplastharz.

Im Rahmen der Ausbesserung von Fehlstellen auf Mehrschichtlackierungen, das heißt also, wenn das Substrat eine Fehlstellen aufweisende Originallackierung darstellt, bevorzugt eine erfindungsgemäße Fehlstellen aufweisende Mehrschichtlackierung, wird bevorzugt das Niedrigtemperatureinbrennen angewendet.

Ein weiterer Aspekt der vorliegenden Erfindung ist die Verwendung der erfindungsgemäßen wässrigen Dispersionen in pigmentierten wässrigen Basislacken zur Haftungsverbesserung.

Die erfindungsgemäßen wässrigen Dispersionen können zur Haftungsverbesserung bei der Lackierung von Metall- und Kunststoffsubstraten eingesetzt werden. Ebenso lassen sie sich in der Autoreparaturlackierung einsetzen. Unter Autoreparaturlackierung ist sowohl die OEM-Automobilreparaturlackierung als auch die Automobilreparaturlackierung gemeint, welche beispielsweise in einer Werkstatt stattfindet.

Werden die besagten pigmentierten wässrigen Basislacke bei der Lackierung von Metall- und Kunststoffsubstraten eingesetzt, so führt der Einsatz der erfindungsgemäßen wässrigen Dispersion insbesondere zu einer Verbesserung der Haftung zwischen der Basislackschicht und der unmittelbar an diese angrenzende Klarlackschicht. Die erfindungsgemäße Dispersion wird daher bevorzugt zur Haftungsverbesserung zwischen Basislackschicht und Klarlackschicht bei der Lackierung von Metallsubstraten und Kunststoffsubstraten verwendet.

Werden die besagten pigmentierten wässrigen Basislacke bei der Autoreparaturlackierung eingesetzt, so führt

der Einsatz der erfindungsgemäßen wässrigen Dispersion insbesondere zu einer Haftungsverbesserung zwischen Basislack und Erstlackierung. Die erfindungsgemäße wässrige Dispersion wird daher ebenfalls bevorzugt zur Verbesserung der Haftung zwischen Basislackschicht und Erstlackierung in der Autoreparaturlackierung, besonders bevorzugt in der OEM-Automobilreparaturlackierung verwendet.

Die Haftungsproblematik bei Systemen des Stands der Technik ist insbesondere dann eklatant, wenn die beschichteten Substrate der Witterung ausgesetzt sind. Entsprechende Witterungsverhältnisse lassen sich durch eine sogenannte Schwitzwasserlagerung simulieren. Der Begriff Schwitzwasserlagerung bezeichnet die Lagerung von beschichteten Substraten in einer Klimakammer nach Prüfklima CH nach DIN EN ISO 6270-2:2005-09.

Die erfindungsgemäßen wässrigen Dispersionen werden daher insbesondere auch verwendet, um die Haftung nach einer Schwitzwasserlagerung zu verbessern. Die Haftung wird bevorzugt mittels Dampfstrahltest nach Prüfverfahren A der DIN 55662:2009-12 untersucht.

Wenn beschichtete Substrate der Witterung ausgesetzt sind treten häufig Blasen und Quellungen auf. Die erfindungsgemäßen wässrigen Dispersionen werden daher insbesondere auch verwendet, um das Auftreten von Blasen und Quellungen in Mehrschichtlackierungen zu reduzieren oder zu verhindern. Das Vorliegen von Blasen und Quellungen kann dabei visuell begutachtet werden.

Im Folgenden wird die Erfindung anhand von Beispielen erläutert.

## Beispiele

## Beispiele für Bindemittelsynthesen

### 1.1 Herstellung der Saat-Kern-Schale-Acrylate BM2 bis BM7

80 Gew.-% der Positionen 1 und 2 aus Tabelle 1.1 werden
in einen Stahlreaktor (5 L Volumen) mit Rückflusskühler gegeben und auf 80°C aufgeheizt. Die restlichen Anteile der unter "Vorlage" in Tabelle 1.1 aufgeführten Komponenten werden in einem separaten Gefäß vorgemischt. Dieses Gemisch und die Initiatorlösung (Tabelle 1.1, Position 5 und 6) werden innerhalb von 20 min in den Reaktor zu getropft, wobei in der Reaktionslösung eine Konzentration der Monomere von 6,0 Gew.-% während der gesamten Reaktionsdauer nicht überschritten wird. Im Anschluss wird 30 min gerührt.

Die in Tabelle 1.1 unter "Mono 1" angegebenen Komponenten werden in einem separaten Gefäß vorgemischt. Dieses Gemisch wird innerhalb von 2 Stunden in den Reaktor zu getropft, wobei in der Reaktionslösung eine Konzentration der Monomere von 6,0 Gew.-% während der gesamten Reaktionsdauer nicht überschritten wird. Im Anschluss wird 1 Stunde gerührt.

Die in Tabelle 1.1 unter "Mono 2" angegebenen Komponenten werden in einem separaten Gefäß vorgemischt. Dieses Gemisch wird innerhalb von 1 Stunden in den Reaktor zu getropft, wobei in der Reaktionslösung eine Konzentration der Monomere von 6,0 Gew.-% während der gesamten Reaktionsdauer nicht überschritten wird. Im Anschluss wird 2 Stunde gerührt.

Danach wird das Reaktionsgemisch auf 60°C abgekühlt und das Neutralisationsgemisch (Tabelle 1.1, Positionen 20, 21 und 22) in einem separaten Gefäß vorgemischt. Das Neutralisationsgemisch wird innerhalb von 40 min in den Reaktor zu getropft, wobei der pH-Wert der Reaktionslösung auf einen pH-Wert von 7,5 bis 8,5 eingestellt wird. Anschließend wird das Reaktionsprodukt noch 30 min gerührt, auf 25°C abgekühlt und gefiltert.

**Tabelle 1.1: Saat-Kern-Schale-Acrylate BM2 bis BM7**

| | | BM2* | BM3* | BM4 | BM5 | BM6 | BM7 |
|---|---|---|---|---|---|---|---|
| | **Vorlage** | | | | | | |
| 1 | VE-Wasser | 41,81 | 41,81 | 41,81 | 41,81 | 41,81 | 41,81 |
| 2 | EF 800 | 0,18 | 0,18 | 0,18 | 0,18 | 0,18 | 0,18 |
| 3 | Styrol | 0,68 | 0,93 | 0,93 | 0,93 | 0,23 | 0,23 |
| 4 | n-Butylacrylat | 0,48 | 0,23 | 0,23 | 0,23 | 0,93 | 0,93 |
| | **Initiatorlösung** | | | | | | |
| 5 | VE-Wasser | 0,53 | 0,53 | 0,53 | 0,53 | 0,53 | 0,53 |
| 6 | APS | 0,02 | 0,02 | 0,02 | 0,02 | 0,02 | 0,02 |

(fortgesetzt)

| | | | | | | | |
|---|---|---|---|---|---|---|---|
| | **Mono 1** | | | | | | |
| 7 | VE-Wasser | 12,78 | 12,78 | 12,78 | 12,78 | 12,78 | 12,78 |
| 8 | EF 800 | 0,15 | 0,15 | 0,15 | 0,15 | 0,15 | 0,15 |
| 9 | APS | 0,02 | 0,02 | 0,02 | 0,02 | 0,02 | 0,02 |
| 10 | Styrol | 5,61 | 5,61 | 12,41 | 12,41 | 12,41 | 12,41 |
| 11 | n-Butylacrylat | 13,6 | 13,6 | 6,8 | 6,8 | 6,8 | 6,8 |
| 12 | 1,6-HDDA | 0,34 | 0,34 | 0,34 | 0,34 | 0,34 | 0,34 |
| | **Mono 2** | | | | | | |
| 13 | VE-Wasser | 5,73 | 5,73 | 5,73 | 5,73 | 5,73 | 5,73 |
| 14 | EF 800 | 0,07 | 0,07 | 0,07 | 0,07 | 0,07 | 0,07 |
| 15 | APS | 0,02 | 0,02 | 0,02 | 0,02 | 0,02 | 0,02 |
| 16 | Methacrylsäure | 0,71 | 0,71 | 0,71 | 0,71 | 0,71 | 0,71 |
| 17 | 2-HEA | 0,95 | 0,95 | 0,95 | 0,95 | 0,95 | 0,95 |
| 18 | n-Butylacrylat | 3,74 | 1,87 | 3,74 | 1,87 | 3,74 | 1,87 |
| 19 | MMA | 0,58 | 2,45 | 0,58 | 2,45 | 0,58 | 2,45 |
| | **Neutralisation** | | | | | | |
| 20 | VE-Wasser | 6,48 | 6,48 | 6,48 | 6,48 | 6,48 | 6,48 |
| 21 | Butylglykol | 4,76 | 4,76 | 4,76 | 4,76 | 4,76 | 4,76 |
| 22 | DMEA | 0,76 | 0,76 | 0,76 | 0,76 | 0,76 | 0,76 |
| | **pH-Wert** | 8,2 | 8,1 | 7,9 | 8,3 | 8,4 | 8,1 |
| *** erfindungsgemäß** | | | | | | | |

Der Festkörper wurde zur Reaktionskontrolle bestimmt. Die Ergebnisse sind in Tabelle 1.2 angeben:

**Tabelle 1.2: Festkörper der Saat-Kern-Schale-Acrylate BM2 bis BM7**

| | BM2* | BM3* | BM4 | BM5 | BM6 | BM7 |
|---|---|---|---|---|---|---|
| **Festkörpergehalt [%]** | 25,5 | 25,5 | 25,5 | 26 | 27,4 | 26,1 |
| *** erfindungsgemäß** | | | | | | |

Nach jeder Stufe wurde die Teilchengrüße mittels dynamischer Lichtstreuung nach DIN ISO 13321 bestimmt. Die Ergebnisse sind in Tabelle 1.3 wiedergegeben.

**Tabelle 1.3: Teilchengrößen in nm der Saat-Kern-Schale-Acrylate BM2 bis BM7**

| | | BM2* | BM3* | BM4 | BM5 | BM6 | BM7 |
|---|---|---|---|---|---|---|---|
| i | **Nach "Vorlage"** | 90 | 70 | 70 | 70 | 120 | 120 |
| ii | **Nach "Mono 1"** | 150 | 160 | 160 | 180 | 150 | 160 |
| iii | **Nach "Mono 2"** | 190 | 230 | 230 | 250 | 220 | 200 |
| iiii | **nach Neutralisation** | 240 | 290 | 275 | 300 | 250 | 245 |
| *** erfindungsgemäß** | | | | | | | |

Jede der angegebenen Monomermischungen wurde einzeln polymerisiert und im Anschluss die Glasübergangstemperatur mittels DSC nach Norm DIN 53765 bestimmt. Zusätzlich wurde die Glasübergangstemperatur für das

gesamte Polymerisat, nach Neutralisation, mittels DSC nach Norm DIN 53765 bestimmt.
Die Ergebnisse sind in Tabelle 1.4 angegeben.

**Tabelle 1.4: Glasübergangstemperaturen in °C einzelnen Stufen der Saat-Kern-Schale-Acrylate BM2 bis BM7**

| | | BM2* | BM3* | BM4 | BM5 | BM6 | BM7 |
|---|---|---|---|---|---|---|---|
| i | **"Vorlage"** | 30 | 50 | 48 | 50 | -9 | -9 |
| ii | **"Mono 1"** | -11 | -12 | 45 | 45 | 47 | 48 |
| iii | **"Mono 2"** | 4 | 6 | 4 | 4 | 5 | 4 |
| | **gesamtes Polymerisat** | -9 | -7 | 46 | 47 | 45 | 46 |
| *** erfindungsgemäß** | | | | | | | |

**1.2 Herstellung eines dreistufigen Acrylats BM8 (gemäß Korea Polym. J., Vol. 7, No. 4, S. 213-222)**

Die Komponenten 1 bis 4 aus Tabelle 1.5 werden in einen Stahlreaktor (5 L Volumen) mit Rückflusskühler gegeben und auf 80°C aufgeheizt. Die Initiatorlösung (Tabelle 1.2, Position 5 und 6) wird innerhalb von 5 min in den Reaktor zu getropft. Im Anschluss wird 30 min gerührt.
Die in Tabelle 1.5 unter "Mono 1" angegebenen Komponenten werden in einem separaten Gefäß vorgemischt. Dieses Gemisch wird innerhalb von 2 Stunden in den Reaktor zu getropft. Im Anschluss wird 1 Stunde gerührt.
Die in Tabelle 1.5 unter "Mono 2" angegebenen Komponenten werden in einem separaten Gefäß vorgemischt. Dieses Gemisch wird innerhalb von 1 Stunden in den Reaktor zu getropft. Im Anschluss wird 1 Stunde gerührt.
Danach wird da Reaktionsgemisch auf 60°C abgekühlt und das Neutralisationsgemisch (Tabelle 1.2, Positionen 21 und 22) in einem separaten Gefäß vorgemischt. Das Neutralisationsgemisch wird innerhalb von 40 min in den Reaktor zu getropft. Anschließend wird das Reaktionsprodukt noch 30 min gerührt, auf 25°C abgekühlt.

**Tabelle 1.5: Mehrstufiges Acrylat BM8**

| | | BM8 |
|---|---|---|
| | **Vorlage** | |
| 1 | VE-Wasser | 43,54 |
| 2 | Rhodapex CO 436 | 0,16 |
| 3 | Styrol | 0,5 |
| 4 | Ethylacrylat | 0,55 |
| | **Initiatorlösung** | |
| 5 | VE-Wasser | 0,55 |
| 6 | APS | 0,02 |
| | **Mono 1** | |
| 7 | VE-Wasser | 13,31 |
| 8 | Rhodapex CO 436 | 0,13 |
| 9 | APS | 0,02 |
| 10 | Styrol | 5,84 |
| 11 | Ethylacrylat | 11,05 |
| 12 | 1,6-HDDA | 0,35 |
| | **Mono 2** | |
| 13 | VE-Wasser | 5,97 |
| 14 | Rhodapex CO 436 | 0,06 |
| 15 | APS | 0,02 |

(fortgesetzt)

| | | |
|---|---|---|
| | **Mono 2** | |
| 16 | Methacrylsäure | 0,74 |
| 17 | 2-HEA | 0,99 |
| 18 | Ethylacrylat | 3,04 |
| 19 | MMA | 0,6 |
| | **Neutralisation** | |
| 20 | VE-Wasser | 6,75 |
| 21 | Butylglykol | 4,96 |
| 22 | DMEA | 0,79 |
| | **pH-Wert** | 8,1 |

Der Festkörpergehalt betrug 23,4 %.
Nach jeder Stufe wurde die Teilchengrüße mittels dynamischer Lichtstreuung nach DIN ISO 13321 bestimmt. Die Ergebnisse sind in Tabelle 1.6 wiedergegeben.

**Tabelle 1.6: Teilchengrößen in nm des mehrstufigen Acrylats BM8**

| | | BM8 |
|---|---|---|
| i | **Nach "Vorlage"** | 110 |
| ii | **Nach "Mono 1"** | 196 |
| iii | **Nach "Mono 2"** | 223 |
| iiii | **nach Neutralisation** | 310 |

Jede der angegebenen Monomermischungen wurde einzeln polymerisiert und im Anschluss die Glasübergangstemperatur mittels DSC nach Norm DIN 53765 bestimmt. Zusätzlich wurde die Glasübergangstemperatur für das gesamte Polymerisat, nach Neutralisation, mittels DSC nach Norm DIN 53765 bestimmt.
Die Ergebnisse sind in Tabelle 1.7 angegeben.

**Tabelle 1.7: Glasübergangstemperaturen in °C einzelnen Stufen des mehrstufigen Acrylats BM8**

| | | BM8 |
|---|---|---|
| i | **"Vorlage"** | 32 |
| ii | **"Mono 1"** | 26 |
| iii | **"Mono 2"** | 35 |
| | **gesamtes Polymerisat** | 26 |

**Beispiele für Lackformulierungen**

**2.1 Herstellung eines nicht erfindungsgemäßen Wasserbasislackes A1 auf Basis eines Polyurethanharzes**

Die in der Tabelle 2.1 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 90-95 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 2.1: Wasserbasislack A1 (nicht erfindungsgemäß)**

| Komponente | Gewichtsteile |
|---|---|
| **Wässrige Phase** | |
| 3%ige Na-Mg-Schichtsilikatlösung | 14,85 |
| deionisiertes Wasser | 11,04 |
| n-Butoxipropanol | 1,35 |
| 2-Ethylhexanol | 1,74 |
| Polyurethanharz, hergestellt gemäß der internationalen Patentanmeldung WO 92/15405, Seite 15, Zeile 23-28 | 17,94 |
| Polyester; hergestellt gemäß Beispiel D, Spalte 16, Z. 37-59 der DE 40 09 858 A1 | 2,05 |
| 3 Gew.-%ige wässrige Rheovis® AS 1130 Lösung (Rheovis® AS 1130 erhältlich von BASF SE) | 3,72 |
| Melaminformaldehydharz (Cymel® 303 der Firma Allnex) | 6,06 |
| 10%iges Dimethylethanolamin in Wasser | 0,52 |
| Pluriol® P900 der Firma BASF SE | 1,74 |
| BYK-347® der Firma Altana/BYK-Chemie GmbH | 0,35 |
| Polyurethanmodifiziertes Polyacrylat; hergestellt gemäß S. 7, Z. 55 bis S.8, Z. 23 der DE 4437535 A1 | 3,46 |
| Isopropanol | 1,48 |
| Triglykol | 1,46 |
| 50 Gew.-%ige Lösung von Rheovis® PU1250 in Butylglykol (Rheovis® PU1250 erhältlich von BASF SE) | 0,63 |
| 30 Gew.-%ige wässrige Rheovis® AS 1130 Lösung, erhältlich von BASF SE | 1,00 |
| 10%iges Dimethylethanolamin in Wasser | 1,00 |
| deionisiertes Wasser | 14,81 |
| **Organische Phase** | |
| Butylglykol | 7,00 |
| Pluriol® E300 der Firma BASF SE | 2,80 |
| Aluminiumpigment, erhältlich von Firma Altana-Eckart (Alu Stapa Hydrolux 8154) | 5,00 |

**2.2 Herstellung eines erfindungsgemäßen Wasserbasislackes A2 auf Basis eines erfindungsgemäßen mehrstufigen Polymerisates von olefinisch ungesättigten Verbindungen**

Die in der Tabelle 2.2 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 90-95 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 2.2: Wasserbasislack A2 (erfindungsgemäß)**

| Komponente | Gewichtsteile |
|---|---|
| **Wässrige Phase** | |
| 3%ige Na-Mg-Schichtsilikatlösung | 10,00 |
| deionisiertes Wasser | 16,33 |
| n-Butoxipropanol | 3,20 |
| Polyurethanmodifiziertes Polyacrylat; hergestellt gemäß S. 7, Z. 55 bis S.8, Z. 23 der DE 4437535 A1 | 3,60 |
| Polyester; hergestellt gemäß Beispiel D, Spalte 16, Z. 37-59 der DE 40 09 858 A1 | 2,70 |
| Saat-Kern-Schale-Acrylat BM2 | 26,05 |
| Melaminformaldehydharz (Cymel® 303 von der Firma Allnex) | 3,20 |
| 10%iges Dimethylethanolamin in Wasser | 1,80 |
| 30 Gew.-%ige wässrige Rheovis® AS 1130 Lösung, erhältlich von BASF SE | 2,00 |
| deionisiertes Wasser | 16,32 |
| **Organische Phase** | |
| Butylglykol | 7,00 |
| Pluriol® E300 der Firma BASF SE | 2,80 |
| Aluminiumpigment, erhältlich von Firma Altana-Eckart (Alu Stapa Hydrolux 8154) | 5,00 |

**2.3 Herstellung eines erfindungsgemäßen Wasserbasislackes A3 auf Basis eines erfindungsgemäßen mehrstufigen Polymerisates von olefinisch ungesättigten Verbindungen**

Der Wasserbasislack **A3** wird analog zu Tabelle 2.2 hergestellt, wobei statt des erfindungsgemäßen Saat-Kern-Schale-Acrylates BM2 das erfindungsgemäße Saat-Kern-Schale-Acrylat BM3, welches einen identischen Festkörper- und Lösungsmittelgehalt hat, eingesetzt wird.

**2.4 Herstellung von nicht erfindungsgemäßen Wasserbasislacken A4 bis A7 auf Basis nicht erfindungsgemäßer mehrstufiger Polymerisate von olefinisch ungesättigten Verbindungen**

Die Wasserbasislacke A4 bis A7 werden analog zu Tabelle 2.2 hergestellt, wobei statt des erfindungsmäßen Saat-Kern-Schale-Acrylates BM2 die nicht erfindungsgemäßen Saat-Kern-Schale-Acrylate BM4, BM5, BM6 bzw. BM7 eingesetzt werden.

**Tabelle 2.3: Zusammensetzungen der Wasserbasislacke A1 bis A7**

| WBL | Bindemittel | erfindungsgemäß | nicht erfindungsgemäß |
|---|---|---|---|
| **A1** | Polyurethanharz, hergestellt gemäß der internationalen Patentanmeldung WO 92/15405, Seite 15, Zeile 23-28 | | **X** |
| **A2** | Saat-Kern-Schale-Acrylat **BM2** | **X** | |
| **A3** | Saat-Kern-Schale-Acrylat **BM3** | **X** | |
| **A4** | Saat-Kern-Schale-Acrylat **BM4** | | **X** |
| **A5** | Saat-Kern-Schale-Acrylat **BM5** | | **X** |
| **A6** | Saat-Kern-Schale-Acrylat **BM6** | | **X** |
| **A7** | Saat-Kern-Schale-Acrylat **BM7** | | **X** |

**Vergleich zwischen den Wasserbasislacken A1, A2 und A3 sowie A4 bis A7**

Zur Bestimmung der Haftungseigenschaften wurden Mehrschichtlackierungen nach folgender allgemeinen Vorschrift hergestellt:

**Originallackierungen**

Auf einem vorbeschichteten metallischen Substrat der Abmessung 10 x 20 cm wird der Wasserbasislack mittels Zweifachauftrag appliziert; die Applikation im ersten Schritt erfolgt elektrostatisch mit einer Zielschichtdicke von 10-12 μm, im zweiten Schritt wird nach einer 3-minüten Ablüftzeit bei Raumtemperatur pneumatisch mit einer Zielschichtdicke von 4-6 μm appliziert. Die resultierende Wasserbasislackschicht wird anschließend nach erneuter Ablüftzeit bei Raumtemperatur von 5 Minuten im Umluftofen für 10 Minuten bei 80 °C getrocknet. Auf die getrocknete Wasserbasislackschicht wird ein handelsüblicher Zweikomponenten-Klarlack (Evergloss der BASF Coatings GmbH) mit einer Zielschichtdicke von 40-45 μm appliziert. Die resultierende Klarlackschicht wird während 20 Minuten bei Raumtemperatur abgelüftet; anschließend erfolgt die Härtung im Umluftofen bei 140 °C für weitere 20 Minuten. Der so zu erhaltende Aufbau wird im Folgenden als Originallackierung bezeichnet.

Alternativ wird die Aushärtung der Basislack- und Klarlackschicht bei 30 Minuten / 160 °C (im Folgenden als überbrannte Originallackierung bezeichnet) bzw. 20 Minuten / 125 °C (im Folgenden als unterbrannte Originallackierung bezeichnet) durchgeführt.

**Reparaturlackierungen**

Auf die Originallackierung bzw. alternativ auf eine überbrannte oder unterbrannte Originallackierung wird der Wasserbasislack wiederum mittels Zweifachauftrag appliziert, wobei die Applikation im ersten Schritt elektrostatisch (Zielschichtdicke von 10-12 μm) und nach einer 3-minüten Ablüftzeit bei Raumtemperatur im zweiten Schritt pneumatisch (Zielschichtdicke von 4-6 μm) erfolgt. Die resultierende Wasserbasislackschicht wird anschließend nach erneuter 5-minütiger Ablüftzeit bei Raumtemperatur im Umluftofen für 10 Minuten bei 80 °C getrocknet. Auf diese getrocknete Wasserbasislackschicht wird ein handelsüblicher Zweikomponenten-klarlack (Evergloss der BASF Coatings GmbH) mit einer Zielschichtdicke von 40-45 μm appliziert. Die resultierende Klarlackschicht wird während 20 Minuten bei Raumtemperatur abgelüftet; anschließend erfolgt die Härtung im Umluftofen bei 140 °C für weitere 20 Minuten. Der so zu erhaltende Aufbau wird im Folgenden als Reparaturlackierung bezeichnet.

Alternativ wird die Aushärtung der Basislack- und Klarlackschicht bei 30 Minuten / 160 °C (im Folgenden als überbrannte Reparaturlackierung bezeichnet) bzw. 20 Minuten / 125 °C (im Folgenden als unterbrannte Reparaturlackierung bezeichnet) durchgeführt.

Außerdem wird ein weiterer Reparaturaufbau erzeugt, indem auf einer mit einem Schleifpapier angeschliffenen Originallackierung ein handelsüblicher Zweikomponenten-Reparaturklarlack (kratzfest der Firma BASF Coatings GmbH) appliziert wird. Die resultierende Klarlackschicht wird während 20 Minuten bei Raumtemperatur abgelüftet; anschließend erfolgt die Härtung im Umluftofen bei 80 °C für weitere 20 Minuten. Dieser Aufbau wird im Folgenden als 80 °C-Reparaturaufbau bezeichnet.

Die Reparaturlackierungen wurden zum einem unabhängig vom Wasserbasislack der Originallackierung mit A1 als Referenz durchgeführt, zum anderen mit den jeweils entsprechenden Wasserbasislacken, die auch für die Originallackierung verwendet wurden.

Tabelle 2.4 fasst die Unterschiede der einzelnen Mehrschichtaufbauten hinsichtlich der Einbrennbedingungen des Klarlackes zusammen.

**Tabelle 2.4: Übersicht Mehrschichtaufbauten a1 bis a7**

| | **Aufbau** | | | | | | |
|---|---|---|---|---|---|---|---|
| | Originallackierungen | | | Reparatu rlackierungen | | | |
| | **a1** (normal) | **a2** (überbrannt) | **a3** (unterbrannt) | **a4** (normal) | **a5** (überbrannt) | **a6** (unterbrannt) | **a7** (80 °C) |
| Trocknung Klarlack (Originallackierung) | 20 min./ 140 °C | 30 min./ 160 °C | 20 min./ 125 °C | 20 min./ 140 °C | 20 min./ 140 °C | 20 min./ 140 °C | 20 min./ 140 °C |
| Trocknung Klarlack (Reparaturlackierung) | - | - | - | 20 min./ 140 °C | 30 min./ 160 °C | 20 min./ 125 °C | 20 min./ 80 °C |

Zur Beurteilung der technologischen Eigenschaften der Mehrschichtaufbauten wurden Gitterschnitte nach DIN EN ISO 2409 durchgeführt (Note GT 0 bis GT 5; 0 = bester Wert; 5 = schlechtester Wert). Die entsprechenden Untersuchungen wurden an unbelasteten Proben vorgenommen sowie nach einer Schwitzwasserbelastung. Dazu wurden Stahlbleche mit den jeweiligen Mehrschichtaufbauten über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung und Quellung untersucht.

Das Auftreten von Blasen wurde folgendermaßen durch eine Kombination von 2 Werten beurteilt:

- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.

Die Bezeichnung m0g0 bedeutet demzufolge eine blasenfreie Lackierung nach Schwitzwasserlagerung und stellt bezüglich Blasenbildung ein iO-Ergebnis dar.

Außerdem wurden die Mehrschichtlackierungen bzgl. Steinschlaghaftung untersucht. Dazu wurde der Steinschlagtest nach DIN EN ISO 20567-1, Verfahren B durchgeführt. Die Beurteilung des sich ergebenden Schadensbildes erfolgte ebenfalls nach DIN EN ISO 20567-1

In Tabelle 2.5 bis 2.8 bzw. Tabelle 2.9 bis 2.11 sind die Ergebnisse der unterschiedlichen Prüfungen zur Steinschlagbeständigkeit bzw. zum Gitterschnitt vor und nach Schwitzwassertest zusammengefasst.

**Tabelle 2.5: Steinschlagbeständigkeit der Originallackierungen a1 bis a3 der Wasserbasislacke A1 bis A7**

| | **Steinschlagergebnisse** | | | | | | |
|---|---|---|---|---|---|---|---|
| | Wasserbasislacke A1 bis A7 | | | | | | |
| | **A1** | **A2** | **A3** | **A4** | **A5** | **A6** | **A7** |
| **a1** | 2,5 | 2 | 2 | 3,5 | 3 | 2,5 | 3,5 |
| **a2** | 2 | 1,5 | 2 | 2 | 2,5 | 2,5 | 3 |
| **a3** | 2 | 2 | 2 | 2,5 | 3 | 2 | 4 |

**Tabelle 2.6: Steinschlagbeständigkeit der Reparaturlackierungen a4 bis a6 der Wasserbasislacke A1 bis A7 in der Originallackierung und A1 in der Reparaturlackierung**

| | **Steinschlagergebnisse** | | | | | | |
|---|---|---|---|---|---|---|---|
| | Wasserbasislacke A1 bis A7 | | | | | | |
| *Basislack Originallackierung* | **A1** | **A2** | **A3** | **A4** | **A5** | **A6** | **A7** |
| *Basislack Reparaturlackierung* | **A1** | **A1** | **A1** | **A1** | **A1** | **A1** | **A1** |
| **a4** | 1,5 | 2 | 1,5 | 2,5 | 4 | 4 | 5 |
| **a5** | 1,5 | 1,5 | 2 | 3 | 4,5 | 3 | 5 |
| **a6** | 2 | 1,5 | 1,5 | 2,5 | 4 | 3 | 4 |

**Tabelle 2.7: Steinschlagbeständigkeit der Reparaturlackierungen a4 bis a6 der Wasserbasislacke A1 bis A7 in der Originallackierung und A1 in der Reparaturlackierung mit von der DIN EN ISO 20567-1 abweichender Konditionierung der Probeplatten bei -20 °C**

| | **Steinschlagergebnisse** | | | | | | |
|---|---|---|---|---|---|---|---|
| | Wasserbasislacke A1 bis A7 | | | | | | |
| *Basislack Originallackierung* | **A1** | **A2** | **A3** | **A4** | **A5** | **A6** | **A7** |
| *Basislack Reparaturlackierung* | **A1** | **A1** | **A1** | **A1** | **A1** | **A1** | **A1** |
| **a4** | 1,5 | 1,5 | 1,5 | 3 | 4 | 4 | 4 |
| **a5** | 1,5 | 1,5 | 1,5 | 3,5 | 5 | 4 | 5 |
| **a6** | 1,5 | 1,5 | 1,5 | 3 | 4 | 4 | 4 |

**Tabelle 2.8: Steinschlagbeständigkeit der Reparaturlackierungen a4 bis a6 der Wasserbasislacke A1, A2, A5 und A7**

| | **Steinschlagergebnisse** | | | |
|---|---|---|---|---|
| | Wasserbasislacke A1, A2, A5 und A7 | | | |
| *Basislack Originallackierung* | **A1** | **A2** | **A5** | **A7** |
| *Basislack Reparaturlackierung* | **A1** | **A2** | **A5** | **A7** |
| **a4** | 1,5 | 2 | 5 | 4 |
| **a5** | 1,5 | 2 | 5 | 3 |
| **a6** | 2 | 1,5 | 5 | 3,5 |

Die Ergebnisse verdeutlichen, dass nur der Einsatz der erfindungsgemäßen mehrstufigen Polymerisate von olefinisch ungesättigten Verbindungen Vorteile hinsichtlich der Steinschlagbeständigkeit gegenüber dem Stand der Technik zeigt, wohingegen die nicht erfindungsgemäßen mehrstufigen Polymerisate deutliche Schwächen, insbesondere bei den Reparaturlackierungen aufweisen.

**Tabelle 2.9: Gitterschnittbeständigkeit der Originallackierungen a2 und a3 der Wasserbasislacke A1, A2, A5 und A7**

| | **Gitterschnittergebnisse** | | | |
|---|---|---|---|---|
| | Wasserbasislacke A1, A2, A5 und A7 | | | |
| | **A1** | **A2** | **A5** | **A7** |
| **a2** | GT 0 | GT 0 | GT 0 | GT 0 |
| **a3** | GT 0 | GT 0 | GT 0,5 | GT 0,5 |

**Tabelle 2.10: Gitterschnittbeständigkeit der Reparaturlackierungen a4 bis a6 der Wasserbasislacke A1, A2, A5 und A7**

| | **Gitterschnittergebnisse** | | | |
|---|---|---|---|---|
| | Wasserbasislacke A1, A2, A5 und A7 | | | |
| *Basislack Originallackierung* | **A1** | **A2** | **A5** | **A7** |
| *Basislack Reparaturlackierung* | **A1** | **A2** | **A5** | **A7** |
| **a4** | GT 0 | GT 0 | GT 0 | GT 0 |

(fortgesetzt)

| | Gitterschnittergebnisse | | | |
|---|---|---|---|---|
| | Wasserbasislacke A1, A2, A5 und A7 | | | |
| **a5** | GT 0 | GT 0 | GT 0,5 | GT 0 |
| **a6** | GT 0 | GT 0 | GT 0 | GT 0 |

**Tabelle 2.11: Gitterschnittbeständigkeit / Blasenbildung bzw. Quellung nach Schwitzwasserbelastung der Mehrschichtaufbauten a1 und a7 der Wasserbasislacke A1, A2, A5 und A7**

| | Gitterschnittergebnisse / Ergebnisse des Schwitzwassertests | | | |
|---|---|---|---|---|
| | Wasserbasislacke A1, A2, A5 und A7 | | | |
| *Basislack Originallackierung* | **A1** | **A2** | **A5** | **A7** |
| *Basislack Reparaturlackierung* | **A1** | **A2** | **A5** | **A7** |
| **a1** | GT 0 | GT 0 | GT 0 | GT 0 |
| | m0g0 / Quellung | m0g0 / keine Quellung | GT 0 / leichte Quellung | GT 0 / leichte Quellung |
| **a7** | GT 0 | GT 0 | GT 4 | GT 5 |
| **Beurteilung** | niO | iO | niO | niO |
| Erklärung Blasenbildung:<br>m = Anzahl an Blasen<br>g = Größe der Blasen<br>iO = zufriedenstellendes Ergebnis<br>niO = nicht zufriedenstellendes Ergebnis | | | | |

In den Gitterschnittests nach DIN EN ISO 2409 erzielte die erfindungsgemäße Mehrschichtlackierung A2 in allen Aufbauten die Note GT 0, während die Wasserbasislacke, die auf den nicht erfindungsgemäßen mehrstufigen Polymerisaten basieren, im 80 °C-Reparaturaufbau deutliche Schwächen zeigen. Darüber hinaus kann durch Einsatz des erfindungsgemäßen Saat-Kern-Schale-Acrylats **BM2** das Quellungsverhalten der Referenzprobe A1 basierend auf dem Stand der Technik signifikant verbessert werden.

**2.5 Herstellung eines nicht erfindungsgemäßen Wasserbasislackes B1 auf Basis eines nicht erfindungsgemäßen mehrstufigen Acrylats gemäß Korea Polym. J., Vol. 7, No. 4, S. 213-222**

Die in der Tabelle 2.12 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 95-100 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 2.12: Wasserbasislack B1 (nicht erfindungsgemäß)**

| Komponente | Gewichtsteile |
|---|---|
| **Wässrige Phase** | |
| Mehrstufiges Acrylat BM8 (nicht erfindungsgemäß), | 55 |
| deionisiertes Wasser | 29 |

(fortgesetzt)

| Komponente | Gewichtsteile |
|---|---|
| **Wässrige Phase** | |
| 3 Gew.%ige wässrige Rheovis® AS 1130 Lösung; Rheologiemittel, erhältlich von BASF, in Wasser | 2,5 |
| 10%iges Dimethylethanolamin in Wasser | 1 |
| **Organische Phase** | |
| Butylglykol | 5,5 |
| Aluminiumpigment, erhältlich von Firma Altana-Eckart (Alu Stapa Hydrolux 8154) | 7 |

**2.6 Herstellung eines erfindungsgemäßen Wasserbasislackes B2 auf Basis eines erfindungsgemäßen Saat-Kern-Schale-Acrylates**

Die in der Tabelle 2.13 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 70-75 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 2.13: Wasserbasislack B2 (erfindungsgemäß)**

| Komponente | Gewichtsteile |
|---|---|
| **Wässrige Phase** | |
| Saat-Kern-Schale-Acrylat BM2 | 50 |
| deionisiertes Wasser | 34 |
| 3 Gew.%ige wässrige Rheovis® AS 1130 Lösung; Rheologiemittel, erhältlich von BASF, in Wasser | 2,5 |
| 10%iges Dimethylethanolamin in Wasser | 1 |
| **Organische Phase** | |
| Butylglykol | 5,5 |
| Aluminiumpigment, erhältlich von Firma Altana-Eckart (Alu Stapa Hydrolux 8154) | 7 |

**Vergleich zwischen den Wasserbasislacken B1 und B2**

Die zur Einstellung der Spritzviskosität für die Wasserbasislacke B1 und B2 benötigte Menge deionisiertes Wasser und der sich daraus ergebende Festkörpergehalt der jeweiligen Formulierung sind in Tabelle 2.14 zusammengefasst.

**Tabelle 2.14: Menge Wasser zur Einstellung der Spritzviskosität sowie resultierender Festkörper der Basislacke B1 und B2**

| | **B1** | **B2** |
|---|---|---|
| Zugabe Wasser [%] | 80 | 12 |
| Spritzviskosität [mPa·s]; gemessen bei 1000 $s^{-1}$ | 95-100 | 70-75 |
| Festkörpergehalt [%] | 10 | 16 |

Die Ergebnisse belegen, dass der Einsatz des nicht erfindungsgemäßen Bindemittels BM8 aufgrund der hohen

Menge deionisiertem Wasser, die zur Einstellung einer dem Fachmann naheliegenden Spritzviskosität benötigt werden, zu einem Festkörpergehalt führt, welcher für die Anwendung in mehrschichtigen modernen Lackaufbauten, wie sie in der Automobilindustrie eingesetzt werden, nicht mehr akzeptabel ist.

Zur Bestimmung der Stabilität gegen das Auftreten von Blasen nach Schwitzwasserlagerung wurden Mehrschichtlackierungen nach folgender allgemeiner Vorschrift hergestellt:
Auf ein vorbeschichtetes Stahlblech der Abmessungen 10 x 20 cm wurde der Wasserbasislack pneumatisch aufgetragen. Die resultierende Wasserbasislackschicht wurde für 10 Minuten bei Raumtemperatur abgelüftet und anschließend während 10 Minuten im Umluftofen bei 80°C getrocknet. Auf die getrocknete Wasserbasislackschicht wurde ein handelsüblicher Zweikomponenten-Reparaturklarlack (2K Reparatur-Klarlack, kratzfest der Firma BASF Coatings GmbH) appliziert. Die resultierende Klarlackschicht wurde während 20 Minuten bei Raumtemperatur abgelüftet; anschließend erfolgte die Härtung im Umluftofen bei 80 °C für weitere 20 Minuten.

Die so erhaltenen Stahlbleche wurden nun über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung untersucht.

Das Auftreten von Blasen wurde folgendermaßen durch eine Kombination von 2 Werten beurteilt:

- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.

Die Bezeichnung m0g0 bedeutet demzufolge eine blasenfreie Lackierung nach Schwitzwasserlagerung und stellt bezüglich Blasenbildung ein iO-Ergebnis dar.

**Tabelle 2.15: Blasenbildung nach Schwitzwasserbelastung der Wasserbasislacke B1 und B2**

| | B1 | B2 |
|---|---|---|
| Blasenbildung | m3/g1 | m0/g0 |
| Beurteilung | niO | iO |
| Erklärung:<br>m = Anzahl an Blasen<br>g = Größe der Blasen<br>iO = zufriedenstellendes Ergebnis<br>niO = nicht zufriedenstellendes Ergebnis | | |

Die Ergebnisse zeigen, dass bei Einsatz des erfindungsgemäßen Saat-Kern-Schale-Polyacrylates BM2 im Gegensatz zu dem in der Literatur beschriebenem Bindemittel BM8 keine Blasen nach Schwitzwasserbelastung mehr auftreten.

**2.7 Herstellung der nicht erfindungsgemäßen Wasserbasislacke C1 bis C3 auf Basis eines nicht erfindungsgemäßen mehrstufigen Acrylats gemäß Korea Polym. J., Vol. 7, No. 4, S. 213-222**

Die in der Tabelle 2.16 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 90±5 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 2.16: Wasserbasislacke C1 bis C3 (nicht erfindungsgemäß)**

| Komponente | Gewichtsteile | | |
|---|---|---|---|
| **Wässrige Phase** | **C1** | **C2** | **C3** |
| 3%ige Na-Mg-Schichtsilikatlösung | 10 | 0 | 0 |

(fortgesetzt)

| Komponente | Gewichtsteile | | |
|---|---|---|---|
| **Wässrige Phase** | **C1** | **C2** | **C3** |
| Mehrstufiges Acrylat BM8 (nicht erfindungsgemäß), | 28,4 | 28,4 | 28,4 |
| deionisiertes Wasser | 30,3 | 39,3 | 34,8 |
| Polyester; hergestellt gemäß Beispiel D, Spalte 16, Z. 37-59 der DE 40 09 858 A1 | 2,7 | 2,7 | 2,7 |
| n-Butoxipropanol | 3,2 | 3,2 | 3,2 |
| Melaminformaldehydharz (Cymel® 303 der Firma Allnex) | 3,2 | 3,2 | 3,2 |
| 10%iges Dimethylethanolamin in Wasser | 2,3 | 2,3 | 2,3 |
| Polyurethanmodifiziertes Polyacrylat; hergestellt gemäß S. 7, Z. 55 bis S.8, Z. 23 der DE 4437535 A1 | 3,6 | 3,6 | 3,6 |
| 3 Gew.-%ige wässrige Rheovis® AS 1130 Lösung (Rheovis® AS 1130 erhältlich von BASF SE) | 1,5 | 2,5 | 1 |
| Aquatix® 8421, erhältlich von BYK-Chemie GmbH | 0 | 0 | 2 |
| Aquacer® 526, erhältlich von BYK-Chemie GmbH | 0 | 0 | 3 |
| 50 Gew.-%ige Lösung von Rheovis® PU1250 in Butylglykol (Rheovis® PU1250 erhältlich von BASF SE) | 0 | 0 | 1 |
| **Organische Phase** | | | |
| Butylglykol | 7,0 | 7,0 | 7,0 |
| Pluriol® E300 der Firma BASF SE | 2,8 | 2,8 | 2,8 |
| Aluminiumpigment, erhältlich von Firma Altana-Eckart (Alu Stapa Hydrolux 8154) | 5,0 | 5,0 | 5,0 |

**2.8 Herstellung der erfindungsgemäßen Wasserbasislacke C4 bis C6 auf Basis eines erfindungsgemäßen Saat-Kern-Schale-Acrylates**

Die in der Tabelle 2.17 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 90±5 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 2.17: Wasserbasislacke C4 bis C6 (erfindungsgemäß)**

| Komponente | Gewichtsteile | | |
|---|---|---|---|
| **Wässrige Phase** | **C4** | **C5** | **C6** |
| 3%ige Na-Mg-Schichtsilikatlösung | 10 | 0 | 0 |
| Saat-Kern-Schale-Acrylat BM2 | 25,95 | 25,95 | 25,95 |
| deionisiertes Wasser | 32,75 | 41,75 | 37,25 |
| Polyester; hergestellt gemäß Beispiel D, Spalte 16, Z. 37-59 der DE 40 09 858 A1 | 2,7 | 2,7 | 2,7 |
| n-Butoxipropanol | 3,2 | 3,2 | 3,2 |
| Melaminformaldehydharz (Cymel® 303 der Firma Allnex) | 3,2 | 3,2 | 3,2 |
| 10%iges Dimethylethanolamin in Wasser | 2,3 | 2,3 | 2,3 |
| Polyurethanmodifiziertes Polyacrylat; hergestellt gemäß S. 7, Z. 55 bis S.8, Z. 23 der DE 4437535 A1 | 3,6 | 3,6 | 3,6 |

(fortgesetzt)

| Komponente | Gewichtsteile | | |
|---|---|---|---|
| **Wässrige Phase** | **C4** | **C5** | **C6** |
| 3 Gew.-%ige wässrige Rheovis® AS 1130 Lösung (Rheovis® AS 1130 erhältlich von BASF SE) | 1,5 | 2,5 | 1 |
| Aquatix® 8421, erhältlich von BYK-Chemie GmbH | 0 | 0 | 2 |
| Aquacer® 526, erhältlich von BYK-Chemie GmbH | 0 | 0 | 3 |
| 50 Gew.-%ige Lösung von Rheovis® PU1250 in Butylglykol (Rheovis® PU1250 erhältlich von BASF SE) | 0 | 0 | 1 |
| **Organische Phase** | | | |
| Butylglykol | 7,0 | 7,0 | 7,0 |
| Pluriol® E300 der Firma BASF SE | 2,8 | 2,8 | 2,8 |
| Aluminiumpigment, erhältlich von Firma Altana-Eckart (Alu Stapa Hydrolux 8154) | 5,0 | 5,0 | 5,0 |

**Vergleich zwischen den Wasserbasislacken C1 bis C3 und C4 bis C6**

Zur Bestimmung der Stabilität gegen das Auftreten von Blasen und Quellungen nach Schwitzwasserlagerung sowie zur Bestimmung der Haftungseigenschaften vor und nach Schwitzwasserlagerung wurden Mehrschichtlackierungen nach folgender allgemeinen Vorschrift hergestellt:

**Originallackierungen**

Auf einem vorbeschichteten metallischen Substrat der Abmessung 10 x 20 cm wird der Wasserbasislack mittels Zweifachauftrag appliziert; die Applikation im ersten Schritt erfolgt elektrostatisch mit einer Zielschichtdicke von 8-9 μm, im zweiten Schritt wird nach einer 2-minüten Ablüftzeit bei Raumtemperatur pneumatisch mit einer Zielschichtdicke von 4-5 μm appliziert. Die resultierende Wasserbasislackschicht wird anschließend nach erneuter Ablüftzeit bei Raumtemperatur von 5 Minuten im Umluftofen für 5 Minuten bei 80 °C getrocknet. Auf die getrocknete Wasserbasislackschicht wird ein handelsüblicher Zweikomponenten-Klarlack (ProGloss der BASF Coatings GmbH) mit einer Zielschichtdicke von 40-45 μm appliziert. Die resultierende Klarlackschicht wird während 10 Minuten bei Raumtemperatur abgelüftet; anschließend erfolgt die Härtung im Umluftofen bei 140 °C für weitere 20 Minuten. Der so zu erhaltende Aufbau wird im Folgenden als Originallackierung bezeichnet.
Alternativ wird die Aushärtung der Basislack- und Klarlackschicht bei 60 Minuten / 140 C (im Folgenden als überbrannte Originallackierung bezeichnet) durchgeführt.

**Reparaturlackierungen**

Auf die Originallackierung bzw. alternativ die überbrannte Originallackierung wird der Wasserbasislack wiederum mittels Zweifachauftrag appliziert, wobei die Applikation im ersten Schritt elektrostatisch (Zielschichtdicke von 8-9 μm) und nach einer 2-minüten Ablüftzeit bei Raumtemperatur im zweiten Schritt pneumatisch (Zielschichtdicke von 4-5 μm) erfolgt. Die resultierende Wasserbasislackschicht wird anschließend nach erneuter 5-minütiger Ablüftzeit bei Raumtemperatur im Umluftofen für 10 Minuten bei 80 °C getrocknet. Auf diese getrocknete Wasserbasislackschicht wird ein handelsüblicher Zweikomponentenklarlack (ProGloss der BASF Coatings GmbH) mit einer Zielschichtdicke von 40-45 μm appliziert. Die resultierende Klarlackschicht wird während 10 Minuten bei Raumtemperatur abgelüftet; anschließend erfolgt die Härtung im Umluftofen bei 140 °C für weitere 20 Minuten. Der so zu erhaltende Aufbau wird im Folgenden als Reparaturlackierung bezeichnet.
Tabelle 2.18 fasst die Unterschiede der einzelnen Mehrschichtaufbauten hinsichtlich der Einbrennbedingungen des Klarlackes zusammen.

**Tabelle 2.18: Übersicht Mehrschichtaufbauten c1 bis c3**

| | Aufbau | | |
|---|---|---|---|
| | Originallackierungen | Reparatu rlackierungen | |
| | **c1** | **c2** (normal) | **c3** (überbrannt) |
| Trocknung Klarlack (Originallackierung) | 20 min./ 140 °C | 20 min./ 140 °C | 60 min./ 140 °C |
| Trocknung Klarlack (Reparaturlackierung) | - | 20 min./ 140 °C | 20 min./ 140 °C |

Zur Beurteilung der technologischen Eigenschaften der Mehrschichtaufbauten wurden Gitterschnitte nach DIN EN ISO 2409 durchgeführt (Note GT 0 bis GT 5; 0 = bester Wert; 5 = schlechtester Wert). Die entsprechenden Untersuchungen wurden an den unbelasteten Proben vorgenommen sowie nach einer Schwitzwasserbelastung. Dazu wurden Stahlbleche mit den jeweiligen Mehrschichtaufbauten über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung und Quellung untersucht sowie die Haftungseigenschaften mittels Gitterschnitt getestet. Das Auftreten von Blasen wurde folgendermaßen durch eine Kombination von 2 Werten beurteilt:

- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.

Die Bezeichnung m0g0 bedeutet demzufolge eine blasenfreie Lackierung nach Schwitzwasserlagerung und stellt bezüglich Blasenbildung ein iO-Ergebnis dar.

In Tabelle 2.19 und 2.20 sind die Ergebnisse der unterschiedlichen Prüfungen zur Blasenbildung bzw. Quellung sowie zum Gitterschnitt vor und nach Schwitzwassertest zusammengefasst.

**Tabelle 2.19: Blasenbildung bzw. Quellung nach Schwitzwasserbelastung des Mehrschichtaufbaus c1 der Wasserbasislacke C1 bis C6**

| | Ergebnisse des Schwitzwassertests | | | | | |
|---|---|---|---|---|---|---|
| | Wasserbasislacke C1 bis C6 | | | | | |
| | **C1** | **C2** | **C3** | **C4** | **C5** | **C6** |
| **c1** | m1/g1 | m0/g0 | m1/g3 | m0/g0 | m0/g0 | m0/g0 |
| **Quellung** | ja | nein | nein | nein | nein | nein |
| **Beurteilung** | niO | iO | niO | iO | iO | iO |
| Erklärung Blasenbildung:<br>m = Anzahl an Blasen<br>g = Größe der Blasen<br>iO = zufriedenstellendes Ergebnis<br>niO = nicht zufriedenstellendes Ergebnis | | | | | | |

**Tabelle 2.20: Gitterschnittbeständigkeit der Mehrschichtaufbauten c1 bis c3 der Wasserbasislacke C1 bis C6**

| | | Gitterschnittergebnisse | | | | | |
|---|---|---|---|---|---|---|---|
| | | Wasserbasislacke C1 bis C6 | | | | | |
| | | **C1** | **C2** | **C3** | **C4** | **C5** | **C6** |
| **c1** | Vor Schwitzwasserbelastung | GT 0 | GT 0 | GT 0 | GT 0 | GT 0 | GT 0 |
| | Nach Schwitzwasserbelastung | GT 0 | GT 0 | GT 0 | GT 0 | GT 0 | GT 0 |
| **c2** | Vor Schwitzwasserbelastung | GT 1 | GT 0 | GT 3 | GT 0 | GT 0 | GT 0 |
| | Nach Schwitzwasserbelastung | GT 2 | GT 0 | GT 3 | GT 0 | GT 0 | GT 0 |

(fortgesetzt)

| | | Gitterschnittergebnisse | | | | | |
|---|---|---|---|---|---|---|---|
| | | Wasserbasislacke C1 bis C6 | | | | | |
| | | **C1** | **C2** | **C3** | **C4** | **C5** | **C6** |
| **c3** | Vor Schwitzwasserbelastung | GT 4 | GT 3 | GT 4 | GT 0 | GT 0 | GT 0 |
| | Nach Schwitzwasserbelastung | GT 1 | GT 1 | GT 4 | GT 0 | GT 0 | GT 0 |

Die Ergebnisse bestätigen, dass bei Einsatz des erfindungsgemäßen Saat-Kern-Schale-Acrylates **BM2** (Wasserbasislacke **C4** bis **C6**) keine Probleme bezüglich Schwitzwasserbeständigkeit und/oder Haftung mehr auftreten; die Wasserbasislacke **C1** bis **C3,** die das nicht erfindungsgemäße Saat-Kern-Schale-Acrylat **BM8,** hergestellt gemäß Korea Polym. J., Vol. 7, No. 4, S. 213-222, enthalten, zeigen hingegen teilweise Blasenbildung und insbesondere bei der Reparaturlackierung auf einer überbrannten Originallackierung Schwächen hinsichtlich Gitterschnitt.

### 2.9 Herstellung eines nicht erfindungsgemäßen Wasserbasislackes D1 auf Basis eines Polyurethanharzes

Die in der Tabelle 2.21 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 90-95 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 2.21: Wasserbasislack D1 (nicht erfindungsgemäß)**

| Komponente | Gewichtsteile |
|---|---|
| **Wässrige Phase** | |
| 3%ige Na-Mg-Schichtsilikatlösung | 24,35 |
| deionisiertes Wasser | 18,9 |
| n-Butoxipropanol | 1,65 |
| 2-Ethylhexanol | 2,5 |
| Polyurethanharz, hergestellt gemäß der internationalen Patentanmeldung WO 92/15405, Seite 15, Zeile 23-28 | 21,25 |
| Polyester; hergestellt gemäß Beispiel D, Spalte 16, Z. 37-59 der DE 40 09 858 A1 | 2,6 |
| 3 Gew.-%ige wässrige Rheovis® AS 1130 Lösung (Rheovis® AS 1130 erhältlich von BASF SE) | 0,65 |
| Melaminformaldehydharz (Resimene® HM 2608 der Firma Ineos) | 3,8 |
| 10%iges Dimethylethanolamin in Wasser | 1,1 |
| Pluriol® P900 der Firma BASF SE | 1 |
| Byketol®-WS der Firma Altana/BYK-Chemie GmbH | 1 |
| Polyurethanmodifiziertes Polyacrylat; hergestellt gemäß S. 7, Z. 55 bis S.8, Z. 23 der DE 4437535 A1 | 3,8 |
| Isobutanol | 2,4 |
| 1-Propoxi-2-propanol | 2,2 |
| 50 Gew.-%ige Lösung von Rheovis® PU1250 in Butylglykol (Rheovis® PU1250 erhältlich von BASF SE) | 0,8 |

(fortgesetzt)

| Organische Phase | |
|---|---|
| Butylglykol | 5,6 |
| Mischung zweier handelsüblicher Aluminiumpigmente, erhältlich von Firma Altana-Eckart (Alu Stapa Hydrolux 2154 & VP56450) | 4,5 |
| Polyester; hergestellt gemäß Beispiel D, Spalte 16, Z. 37-59 der DE 40 09 858 A1 | 1,9 |

**2.10 Herstellung eines erfindungsgemäßen Wasserbasislackes D2 auf Basis eines erfindungsgemäßen mehrstufigen Polymerisates von olefinisch ungesättigten Verbindungen**

Die in der Tabelle 2.22 unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 90-95 mPa·s bei einer Scherbelastung von 1000 $s^{-1}$, gemessen mit einem Rotations-Viskosimeter (Gerät Rheolab QC mit Temperiersystem C-LTD80/QC der Firma Anton Paar) bei 23 °C, eingestellt.

**Tabelle 2.22: Wasserbasislack D2 (erfindungsgemäß)**

| Komponente | Gewichtsteile |
|---|---|
| **Wässrige Phase** | |
| 3%ige Na-Mg-Schichtsilikatlösung | 26 |
| deionisiertes Wasser | 14,15 |
| n-Butoxipropanol | 1,65 |
| 2-Ethylhexanol | 2,5 |
| Saat-Kern-Schale-Acrylat BM2 (erfindungsgemäß) | 21,25 |
| Polyester; hergestellt gemäß Beispiel D, Spalte 16, Z. 37-59 der DE 40 09 858 A1 | 2,6 |
| 3 Gew.-%ige wässrige Rheovis® AS 1130 Lösung (Rheovis® AS 1130 erhältlich von BASF SE) | 0,65 |
| Melaminformaldehydharz (Resimene® HM 2608 der Firma Ineos) | 3,8 |
| 10%iges Dimethylethanolamin in Wasser | 1,1 |
| Pluriol® P900 der Firma BASF SE | 1 |
| Byketol®-WS der Firma Altana/BYK-Chemie GmbH | 1 |
| Polyurethanmodifiziertes Polyacrylat; hergestellt gemäß S. 7, Z. 55 bis S.8, Z. 23 der DE 4437535 A1 | 3,8 |
| Isobutanol | 2,4 |
| 1-Propoxi-2-propanol | 2,2 |
| 50 Gew.-%ige Lösung von Rheovis® PU1250 in Butylglykol (Rheovis® PU1250 erhältlich von BASF SE) | 0,8 |
| **Organische Phase** | |
| Butylglykol | 5,6 |
| Mischung zweier handelsüblicher Aluminiumpigmente, erhältlich von Firma Altana-Eckart (Alu Stapa Hydrolux 2154 & VP56450) | 4,5 |
| Polyester; hergestellt gemäß Beispiel D, Spalte 16, Z. 37-59 der DE 40 09 858 A1 | 1,9 |

**Vergleich zwischen den Wasserbasislacken D1 und D2**

Zur Bestimmung der aus den verschiedenen Wasserbasislacken resultierenden winkelabhängigen Helligkeiten, aus denen der Flop-Effektes resultiert, wurden Mehrschichtlackierungen nach der folgenden allgemeinen Vorschrift hergestellt:
Ein vorbeschichtetes Stahlblech der Abmessungen 10 x 20 cm wurde mit einem Standard-Füller (SecuBloc der Firma BASF Coatings GmbH) bei einer Zielschichtdicke von 25-35 μm beschichtet. Nach 5-10 Minuten Ablüften bei Raumtemperatur sowie Zwischentrocknen des wässrigen Füllers über einen Zeitraum von 10 Minuten bei 70 °C wurde dieser bei einer Temperatur von 150 °C über einen Zeitraum von 10 Minuten eingebrannt.

Die Wasserbasislacke **D1** und **D2** wurden auf den solchermaßen beschichteten Stahltafeln mittels Zweifachauftrag appliziert; die Applikation im ersten Schritt erfolgte elektrostatisch mit einer Zielschichtdicke von 8-11 μm, im zweiten Schritt wurde nach einer Ablüftzeit von 3 Minuten und 40 Sekunden bei Raumtemperatur pneumatisch mit einer Zielschichtdicke von 3-5 μm appliziert. Die resultierende Wasserbasis-lackschicht wurde anschließend nach erneuter Ablüftzeit bei Raumtemperatur von 4 Minuten und 30 Sekunden im Umluftofen für 5 Minuten bei 70 °C getrocknet. Auf die getrocknete Wasserbasislackschicht wurde ein kratzfester Zweikomponenten-Klarlack (iGloss der BASF Coatings GmbH) mit einer Zielschichtdicke von 40-45 μm appliziert. Die resultierende Klarlackschicht wurde während 7 Minuten bei Raumtemperatur abgelüftet; anschließend erfolgte die Härtung im Umluftofen bei 140 °C für weitere 22 Minuten.

Die so erhaltenen Mehrschichtlackierungen wurden mit Hilfe eines Spekralphotometers der Firma X-Rite (X-Rite MA68 Multi-Angle Spectrophotometer) vermessen. Dabei wird die Oberfläche mit einer Lichtquelle beleuchtet. Unter verschiedenen Winkeln wird eine spektrale Detektion im sichtbaren Bereich durchgeführt. Aus den so erhaltenen spektralen Messwerten können, unter Einbeziehung der Normspektralwerte sowie des Reflektionsspektrums der eingesetzten Lichtquelle, Farbwerte im CIEL*a*b*-Farbraum berechnet werden, wobei L* die Helligkeit, a* den Rot-Grün-Wert und b* den Gelb-Blau-Wert charakterisieren. Dieses Verfahren ist für Metall-Flake enthaltende Materialien in der ASTM E2194-12 beschrieben. Der oft für die Quantifizierung des Metallic-Effekts herangezogene abgeleitete Wert ist der sogenannte Flop-Index; dieser beschreibt in erster Linie die Abhängigkeit der Helligkeit vom Beobachtungswinkel (siehe A.B.J. Rodriguez, JOCCA, 1992 (4), S. 150-153). Aus den ermittelten Helligkeitswerten für die Betrachtungswinkel 15°, 45° und 110° kann der so genannte Flop-Index (FL) nach der Formel

$$FL = 2{,}69\ (L^*_{15°} - L^*_{110°})^{1{,}11} / (L^*_{45°})^{0{,}86}$$

berechnet werden.

**Tabelle 2.23: Flop-Indizes der Wasserbasislacke D1 und D2**

| Wasserbasislack | erfindungsgemäß | Flop-Index |
|---|---|---|
| D1 | nein | 13,4 |
| D2 | ja | 14,4 |

Der metallische Flop war bei beiden Mehrschichtlackierungen sehr gut ausgeprägt, wobei der erfindungsgemäße Wasserbasislack auf Basis des erfindungsgemäßen Saat-Kern-Schale-Acrylates Vorteile aufwies.

Zur Bestimmung der Kocher- und Läuferneigung der Wasserbasislacke **D1** und **D2** wurden in Anlehnung an DIN EN ISO 28199-1 und DIN EN ISO 28199-3 Mehrschichtlackierungen nach der folgenden allgemeinen Vorschrift hergestellt:
Ein vorbeschichtetes Lochblech der Abmessungen 57 x 20 cm (gemäß DIN EN ISO 28199-1 Punkt 8.1 Ausführung A) wurde mit einem Standard-Füller (SecuBloc der Firma BASF Coatings GmbH) bei einer Zielschichtdicke von 25-35 μm beschichtet. Nach 5-10 Minuten Ablüften bei Raumtemperatur sowie Zwischen-trocknen des wässrigen Füllers über einen Zeitraum von 10 Minuten bei 70 °C wurde dieser bei einer Temperatur von 150 °C über einen Zeitraum von 10 Minuten eingebrannt.

Analog DIN EN ISO 28199-1 Punkt 8.2 wurden solchermaßen beschichtete Stahltafeln vorbereitet und anschließend die Wasserbasislacke **D1** und **D2** auf diesen elektrostatisch als Keil mit einer Schichtdicke von 0 μm bis mindestens 30 μm appliziert. Die resultierende Wasserbasislackschicht wurde nach einer Ablüftzeit bei Raumtemperatur von 4 Minuten und 30 Sekunden im Umluftofen für 5 Minuten bei 70 °C getrocknet. Im Falle der Prüfung bzgl. Läufer wurden die Bleche senkrecht stehend abgelüftet und getrocknet. Auf die getrocknete Wasserbasislackschicht wurde ein kratzfester Zweikomponenten-Klarlack (iGloss der BASF Coatings GmbH) mit einer Zielschichtdicke von 40-45 μm appliziert. Die resultierende Klarlackschicht wurde während 7 Minuten bei Raumtemperatur abgelüftet; anschließend erfolgte die Härtung im Umluftofen bei 140 °C für weitere 22 Minuten.

Die Bestimmung der Kochergrenze, also der Basislackschichtdicke, ab der Kocher auftreten, erfolgte nach DIN EN ISO 28199-3 Punkt 5

Die Bestimmung der Läuferneigung wurde nach DIN EN ISO 28199-3 Punkt 4 durchgeführt. Zusätzlich zu der Schichtdicke, bei der ein Läufer die Länge von 10 mm ab Unterkante des Loches überschreitet, wurde die Schichtdicke bestimmt, ab der eine erste Läuferneigung an einem Loch visuell zu beobachten ist.

Die jeweiligen Schichtdicken wurden nach DIN EN ISO 2808 Verfahren 12A (z.B. mit dem Messgerät MiniTest 3100 - 4100 der Fa. ElektroPhysik) bestimmt.
Die entsprechenden Versuchsergebnisse finden sich in Tabelle 2.24.

**Tabelle 2.24: Kocher- und Läuferneigung der Wasserbasislacke D1 und D2 (Basislack-Keil von 0 bis ca. 50 μm)**

| | D1 (Referenz) | D2 (erfindungsgemäß) |
|---|---|---|
| Läufer (> 0 mm) | 19 μm | keine |
| Läufer (> 10 mm) | 46 μm | keine |
| Kocher | 18 μm | keine |

Die in Tabelle 2.24 zusammengestellten Ergebnisse zeigen, dass unter Verwendung des erfindungsgemäßen Bindemittels **BM2** eine signifikant robustere Basislackformulierung zu erzielen ist, die im Vergleich zur Referenz deutliche Vorteile hinsichtlich Läufer und Kocherneigung aufweist.

Zur Bestimmung der Lagerstabilität der Wasserbasislacke **D1** und **D2** wurden beide Materialien vor und nach einer Lagerung bei 40 °C für 2 Wochen mit einem der DIN 53019-1 entsprechenden und nach DIN 53019-2 kalibrierten Rotationsviskosimeter unter temperierten Bedingungen (23,0 °C ± 0,2 °C) untersucht. Dabei wurden die Proben zunächst 5 Minuten mit einer Scherrate von 1000 $s^{-1}$ (Belastungsphase) und anschließend 8 Minuten mit einer Scherrate von 1 $s^{-1}$ (Entlastungsphase) geschert. Das mittlere Viskositätsniveau während der Belastungsphase (Hochscherviskosität) sowie das Niveau nach 8 Minuten Entlastungsphase (Niederscherviskosität) wurden aus den Messdaten ermittelt und die Werte vor und nach Lagerung miteinander verglichen.

Die prozentualen Änderungen der Hoch- und Niederscherviskosität nach Lagerung bei 40 °C sind in Tabelle 1.25 zusammengefasst.

**Tabelle 2.25: Lagerstabilität der Wasserbasislacke in Form von Viskositätsänderungen nach 2 Wochen Lagerung bei 40 °C**

| | D1 (Referenz) | D2 (erfindungsgemäß) |
|---|---|---|
| Änderung Hochscherviskosität bei 1000 $s^{-1}$ | -22,3% | -6,0% |
| Änderung Niederscherviskosität bei 1 $s^{-1}$ | -15,1% | -6,2% |

Der das erfindungsgemäße Bindemittel **BM2** enthaltende Wasserbasislack **D2** zeigt eine signifikant stabilere Hoch- und Niederscherviskosität nach Lagerung bei 40 °C als die Referenz **D1.**

Zur Bestimmung der Haftungseigenschaften wurden Mehrschichtlackierungen nach folgender allgemeinen Vorschrift hergestellt:

**Originallackierungen**

Ein vorbeschichtetes metallisches Substrat der Abmessung 10 x 20 cm wurde mit einem Standard-Füller (SecuBloc der Firma BASF Coatings GmbH) bei einer Zielschichtdicke von 25-35 μm beschichtet. Nach 5-10 Minuten Ablüften bei Raumtemperatur sowie Zwischentrocknen des wässrigen Füllers über einen Zeitraum von 10 Minuten bei 70 °C wurde dieser bei einer Temperatur von 150 °C über einen Zeitraum von 10 Minuten eingebrannt.

Die Wasserbasislacke **D1** und **D2** wurden auf den solchermaßen beschichteten Stahltafeln mittels Zweifachauftrag appliziert; die Applikation im ersten Schritt erfolgte elektrostatisch mit einer Zielschichtdicke von 8-11 μm, im zweiten Schritt wurde nach einer Ablüftzeit von 3 Minuten und 40 Sekunden bei Raumtemperatur pneumatisch mit einer Zielschichtdicke von 3-5 μm appliziert. Die resultierende Wasserbasis-lackschicht wurde anschließend nach erneuter Ablüftzeit bei Raumtemperatur von 4 Minuten und 30 Sekunden im Umluftofen für 5 Minuten bei 70 °C getrocknet. Auf die getrocknete Wasserbasislackschicht wurde ein kratzfester Zweikomponenten-Klarlack (iGloss der BASF Coatings GmbH) mit einer Zielschichtdicke von 40-45 μm appliziert. Die resultierende Klarlackschicht wurde während 7 Minuten bei Raumtemperatur abgelüftet; anschließend erfolgte die Härtung im Umluftofen bei 140 °C für weitere 22 Minuten.

Der so zu erhaltende Aufbau wird im Folgenden als Originallackierung bezeichnet.

Alternativ wurde die Aushärtung der Basislack- und Klarlackschicht bei 60 Minuten / 145 °C (im Folgenden als überbrannte Originallackierung bezeichnet) durchgeführt.

**Reparaturlackierungen**

Für die Reparaturlackierungen wurden die Originallackierungen bzw. alternativ die überbrannten Originallackierungen entweder ungeschliffen verwendet oder wurden mit einem aus Hartgummi bestehendem Schleifklotz der Maße 115 x 70 x 25 mm und Schleifpapier der Körnung P 500 angeschliffen (2 Doppelhübe) bzw. matt geschliffen.

Auf die derart unbehandelten bzw. behandelten Substrate wurden die Wasserbasislacke **D1** und **D2** wiederum mittels Zweifachauftrag appliziert, wobei die Applikation im ersten Schritt elektrostatisch (Zielschichtdicke von 8-11 $\mu$m) und nach einer Ablüftzeit von 3 Minuten und 40 Sekunden bei Raumtemperatur im zweiten Schritt pneumatisch (Zielschichtdicke von 3-5 $\mu$m) erfolgte. Die resultierende Wasserbasislackschicht wurde anschließend nach erneuter Ablüftzeit von 4 Minuten und 30 Sekunden bei Raumtemperatur im Umluftofen für 5 Minuten bei 70 °C getrocknet. Auf die getrocknete Wasserbasislackschicht wurde ein kratzfester Zweikomponenten-Klarlack (iGloss der BASF Coatings GmbH) mit einer Zielschichtdicke von 40-45 $\mu$m appliziert. Die resultierende Klarlackschicht wurde während 7 Minuten bei Raumtemperatur abgelüftet; anschließend erfolgte die Härtung im Umluftofen bei 140 °C für weitere 22 Minuten. Der so zu erhaltende Aufbau wird im Folgenden als Reparaturlackierung bezeichnet.

Alternativ wurde ein Zweikomponenten-Reparaturklarlack (2K Reparatur-Klarlack der Firma BASF Coatings GmbH) mit einer Zielschichtdicke von 40-45 $\mu$m appliziert. Die resultierende Klarlackschicht wurde während 7 Minuten bei Raumtemperatur abgelüftet; anschließend erfolgt die Härtung im Umluftofen bei 85 °C für weitere 37 Minuten. Dieser Aufbau wird im Folgenden als 85 °C-Reparaturaufbau bezeichnet.

Tabelle 2.26 fasst die Unterschiede der einzelnen Mehrschichtaufbauten hinsichtlich der Einbrennbedingungen des Klarlackes sowie der Oberflächenbehandlung des Klarlackes der Originallackierung zusammen.

**Tabelle 2.26: Übersicht Mehrschichtaufbauten d1 bis d10**

| | **Aufbau** | | | | | | | | | |
|---|---|---|---|---|---|---|---|---|---|---|
| | Originallackierung | Reparatu rlackierungen | | | | | | | | |
| | **d1** | **d2** | **d3** | **d4** | **d5** | **d6** | **d7** | **d8** | **d9** | **d10** |
| | (normal) | (normal) | | | (überbrannt) | | | 85 °C-Reparatur | | |
| Trocknung Klarlack (Originallackierung) | 22 min. / 140 °C | 22 min./ 140 °C | | | 60 min. / 145 °C | | | 22 min./ 140 °C | | |
| Schleifen | a) | a) | b) | c) | a) | b) | c) | a) | b) | c) |
| Trocknung Klarlack (Reparaturlackierung) | - | 22 min. / 140 °C | | | | | | 37 min. / 85 °C | | |
| a) Klarlack der Originallackierung wird nicht geschliffen<br>b) Klarlack der Originallackierung wird angeschliffen (2 Doppelhübe)<br>c) Klarlack der Originallackierung wird matt geschliffen | | | | | | | | | | |

Zur Beurteilung der Schwitzwasserbeständigkeit wurden die Mehrschichtaufbauten **d1** bis **d10** der Wasserbasislacke **D1** und **D2** über einen Zeitraum von 10 Tagen in einer Klimakammer nach Prüfklima CH nach DIN EN ISO 6270-2:2005-09 gelagert. Anschließend wurden die Bleche 1 Stunde sowie 24 Stunden nach Entnahme aus der Klimakammer visuell bezüglich Blasenbildung sowie hinsichtlich der Haftungseigenschaften untersucht.

Das Auftreten von Blasen wurde folgendermaßen durch eine Kombination von 2 Werten beurteilt:

- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.

Die Bezeichnung m0g0 bedeutet demzufolge eine blasenfreie Lackierung nach Schwitzwasserlagerung und stellt bezüglich Blasenbildung ein iO-Ergebnis dar.

Die Beurteilung der Haftungseigenschaften der Mehrschichtaufbauten erfolgte zum einem durch Gitterschnitte nach DIN EN ISO 2409 (Note GT 0 bis GT 5; 0 = bester Wert; 5 = schlechtester Wert).

Außerdem wurde die Steinschlaghaftung der Wasserbasislacke **D1** und **D2** untersucht; dazu wurde der Steinschlagtest nach DIN EN ISO 20567-1, Verfahren B durchgeführt. Die Beurteilung des sich ergebenden Schadensbildes erfolgte ebenfalls nach DIN EN ISO 20567-1.

Des Weiteren wurden Dampfstrahltests nach DIN 55662, Verfahren B durchgeführt. Das Anbringen der Ritze (Andreaskreuz) erfolgte dabei mit einem Ritzstichel nach Sikkens (siehe DIN EN ISO 17872 Anhang A). Die Beurteilung der Ergebnisse Dampf Strahltests wurde nach DIN 55662 durchgeführt, wobei insbesondere maximale Breite der Ablösungen in Millimetern bestimmt wurde.

Darüber hinaus wurden Dampfstrahlprüfungen nach DIN 55662, Verfahren B (Anbringen eines Andreaskreuzes einem Ritzstichel nach Sikkens gemäß DIN EN ISO 17872 Anhang A), auf Substraten, an denen zuvor ein Steinschlagtest nach DIN EN ISO 20567-1, Verfahren B erfolgte, durchgeführt. Zur visuellen Auswertung des Schadensbildes wurde folgende Skala benutzt:

KW0 = keine Veränderung der Probe
KW1 = geringfügige Auswaschung der vorhandenen Schäden
KW2 = deutlich sichtbare Auswaschung der vorhanden Schäden in einer Lackschicht
KW3 = vollständige Enthaftung einer Lackschicht im Bereich des Strahls
KW4 = vollständige Enthaftung einer Lackschicht über den Strahlbereich hinaus
KW5 = Ablösen der kompletten Lackschicht bis zum Substrat

In Tabelle 2.27 bis 2.31 sind die Ergebnisse der unterschiedlichen Haftungsprüfungen (Gitterschnitt, Steinschlag, Dampfstrahl) vor und nach Schwitzwassertest zusammengefasst.

**Tabelle 2.27: Gitterschnittbeständigkeit der Mehrschichtaufbauten d1 bis d10 der Wasserbasislacke D1 und D2 vor und 1 Stunde nach Schwitzwasserbelastung**

| | | **Gitterschnittergebnisse** | |
|---|---|---|---|
| | | Wasserbasislacke **D1** und **D2** | |
| | | **D1** | **D2** |
| **d1** | Vor Schwitzwasserbelastung | GT 0 | GT 0 |
| | Nach Schwitzwasserbelastung | GT 0 | GT 0 |
| **d2** | Vor Schwitzwasserbelastung | GT 1 | GT 0 |
| | Nach Schwitzwasserbelastung | GT 0,5 | GT 0 |
| **d3** | Vor Schwitzwasserbelastung | GT 0 | GT 0 |
| | Nach Schwitzwasserbelastung | GT 0,5 | GT 0,5 |
| **d4** | Vor Schwitzwasserbelastung | GT 0 | GT 0 |
| | Nach Schwitzwasserbelastung | GT 1 | GT 0 |
| **d5** | Vor Schwitzwasserbelastung | GT 2 | GT 0 |
| | Nach Schwitzwasserbelastung | GT 0 | GT 0 |
| **d6** | Vor Schwitzwasserbelastung | GT 0,5 | GT 0 |
| | Nach Schwitzwasserbelastung | GT 0,5 | GT 0 |
| **d7** | Vor Schwitzwasserbelastung | GT 0,5 | GT 0 |
| | Nach Schwitzwasserbelastung | GT 0,5 | GT 0 |
| **d8** | Vor Schwitzwasserbelastung | GT 0,5 | GT 0 |
| | Nach Schwitzwasserbelastung | GT 0 | GT 0 |
| **d9** | Vor Schwitzwasserbelastung | GT 0,5 | GT 0,5 |
| | Nach Schwitzwasserbelastung | GT 0 | GT 0 |
| **d10** | Vor Schwitzwasserbelastung | GT 1 | GT 0,5 |
| | Nach Schwitzwasserbelastung | GT 0 | GT 0 |

Die Ergebnisse bestätigen, dass bei Einsatz des erfindungsgemäßen Saat-Kern-Schale-Acrylates **BM2** (Wasserbasislack **D2**) keine Probleme bezüglich Gitterschnitthaftung nach Schwitzwasserbelastung auftreten; die nach DIN EN ISO 2409 durchgeführte Bewertung des Schadensbildes ist für viele Aufbauten besser, mindestens aber genauso gut wie bei der Referenz **(D1).**

**Tabelle 2.28: Blasenbildung nach Schwitzwasserbelastung der Mehrschichtaufbauten d1 bis d10 der Wasserbasislacke D1 und D2**

| | **Ergebnisse des Schwitzwassertests** | |
|---|---|---|
| | Wasserbasislacke **D1** bis **D2** | |
| | **D1** | **D2** |
| **d1** | m0/g0 | m0/g0 |
| **d2** | m0/g0 | m0/g0 |
| **d3** | m0/g0 | m0/g0 |
| **d4** | m0/g0 | m0/g0 |
| **d5** | m0/g0 | m0/g0 |
| **d6** | m0/g0 | m0/g0 |
| **d7** | m0/g0 | m0/g0 |
| **d8** | m0/g0 | m0/g0 |
| **d9** | m0/g0 | m0/g0 |
| **d10** | m0/g0 | m0/g0 |
| **Beurteilung** | iO | iO |
| Erklärung Blasenbildung:<br>m = Anzahl an Blasen<br>g = Größe der Blasen<br>iO = zufriedenstellendes Ergebnis<br>niO = nicht zufriedenstellendes Ergebnis | | |

Keiner der Mehrschichtaufbauten zeigte nach Schwitzwasserbelastung Blasenbildung.

**Tabelle 2.29: Steinschlagbeständigkeit der Mehrschichtaufbauten d1 bis d10 der Wasserbasislacke D1 und D2**

| | **Steinschlagergebnisse** | |
|---|---|---|
| | Wasserbasislacke **D1** bis **D2** | |
| | **D1** | **D2** |
| **d1** | 2 | 1 |
| **d2** | 4 | 3 |
| **d3** | 4 | 2,5 |
| **d4** | 4,5 | 2,5 |
| **d5** | 3,5 | 3 |
| **d6** | 4 | 2 |
| **d7** | 4 | 2 |
| **d8** | 5 | 2,5 |
| **d9** | 4 | 3 |
| **d10** | 5 | 3,5 |

Der Einsatz des erfindungsgemäßen Saat-Kern-Schale-Acrylates **BM2** (Wasserbasislack **D2**) zeigte bezüglich Steinschlagbeständigkeit eine signifikante Verbesserung im Vergleich zur Referenz (**D1**).

**Tabelle 2.30: Dampfstrahlbeständigkeit (nach DIN 55662, Verfahren B) der Mehrschichtaufbauten d1 bis d7 der Wasserbasislacke D1 und D2 vor und 1 bzw. 24 Stunde(n) nach Schwitzwasserbelastung**

| | | | **Dampfstrahlergebnisse** | |
|---|---|---|---|---|
| | | | Wasserbasislacke **D1** und **D2** | |
| | | | **D1** | **D2** |
| **d1** | Vor Schwitzwasserbelastung | | < 1 mm / iO | < 1 mm / iO |
| | Nach Schwitzwasserbelastung | 1 h | > 1 mm / niO | < 1 mm / iO |
| | | 24 h | < 1 mm / iO | < 1 mm / iO |
| **d2** | Vor Schwitzwasserbelastung | | < 1 mm / iO | < 1 mm / iO |
| | Nach Schwitzwasserbelastung | 1 h | > 1 mm / niO | < 1 mm / iO |
| | | 24 h | 1 mm / biO | < 1 mm / iO |
| **d3** | Vor Schwitzwasserbelastung | | < 1 mm / iO | < 1 mm / iO |
| | Nach Schwitzwasserbelastung | 1 h | < 1 mm / iO | < 1 mm / iO |
| | | 24 h | 1 mm / biO | < 1 mm / iO |
| **d4** | Vor Schwitzwasserbelastung | | < 1 mm / iO | < 1 mm / iO |
| | Nach Schwitzwasserbelastung | 1 h | 1 mm / biO | < 1 mm / iO |
| | | 24 h | < 1 mm / iO | < 1 mm / iO |
| **d5** | Vor Schwitzwasserbelastung | | > 1 mm / niO | < 1 mm / iO |
| | Nach Schwitzwasserbelastung | 1 h | > 1 mm / niO | < 1 mm / iO |
| | | 24 h | > 1 mm / niO | < 1 mm / iO |
| **d6** | Vor Schwitzwasserbelastung | | < 1 mm / iO | < 1 mm / iO |
| | Nach Schwitzwasserbelastung | 1 h | 1 mm / biO | < 1 mm / iO |
| | | 24 h | 1 mm / biO | < 1 mm / iO |
| **d7** | Vor Schwitzwasserbelastung | | < 1 mm / iO | < 1 mm / iO |
| | Nach Schwitzwasserbelastung | 1 h | 1 mm / biO | < 1 mm / iO |
| | | 24 h | 1 mm / biO | < 1 mm / iO |
| Erklärung Dampfstrahlergebnisse (maximale Breite der Ablösungen):<br>< 1 mm = iO (zufriedenstellendes Ergebnis)<br>1 mm = biO (bedingt zufriedenstellendes Ergebnis)<br>> 1 mm = niO (nicht zufriedenstellendes Ergebnis) | | | | |

Bei Einsatz des erfindungsgemäßen Saat-Kern-Schale-Acrylates **BM2** (Wasserbasislack **D2)** wird im Dampfstrahltest nach DIN 55662, Verfahren B durchweg ein zufriedenstellendes Ergebnis erzielt, während die Referenz (**D1**) in vielen Tests Schwächen aufweist, insbesondere nach Schwitzwasserbelastung und bei dem Mehrschichtaufbau **d5** (Reparaturlackierung auf überbranntem Klarlack ohne vorheriges Anschleifen).

**Tabelle 2.31: Dampfstrahlbeständigkeit (nach DIN 55662, Verfahren B, gemessen nach Steinschlagbelastung der Substrate nach DIN EN ISO 20567-1, Verfahren B) der Mehrschichtaufbauten d1 bis d7 der Wasserbasislacke D1 und D2**

| | **Dampfstrahlergebnisse** | |
|---|---|---|
| | Wasserbasislacke **D1** bis **D2** | |
| | **D1** | **D2** |
| **d1** | KW0 | KW0 |
| **d2** | KW0 | KW0 |
| **d3** | KW1 | KW0 |
| **d4** | KW0 | KW0 |
| **d5** | KW4 | KW0 |
| **d6** | KW0 | KW0 |
| **d7** | KW0 | KW0 |
| Erklärung Dampfstrahlergebnisse im Steinschlagschaden:<br>KW0 = keine Veränderung der Probe<br>KW1 = geringfügige Auswaschung der vorhandenen Schäden<br>KW2 = deutlich sichtbare Auswaschung der vorhanden Schäden in einer Lackschicht<br>KW3 = vollständige Enthaftung einer Lackschicht im Bereich des Strahlbleches<br>KW4 = vollständige Enthaftung einer Lackschicht über den Strahlbereich hinaus<br>KW5 = Ablösen der kompletten Lackschicht bis zum Substrat | | |

Die Ergebnisse belegen, dass der erfindungsgemäße Wasserbasislack **D2** auf Basis des erfindungsgemäßen Saat-Kern-Schale-Acrylates **BM2** in keinem Mehrschichtaufbau Veränderungen der Probe im Dampfstrahltest nach vorherigem Steinschlagtest zeigt. Insbesondere bei der Reparaturlackierung auf überbranntem Klarlack ohne vorheriges Anschleifen (Mehrschichtaufbau d5) weist er damit einen signifikanten Vorteil gegenüber der Referenz **D1** auf.

## Patentansprüche

**1.** Wässrige Dispersion, enthaltend mindestens ein Polymerisat, herstellbar durch

i. Polymerisation einer Mischung von olefinisch ungesättigten Monomeren A durch Emulsionspolymerisation in Wasser unter Verwendung eines Emulgators und eines wasserlöslichen Initiators, wobei ein aus den Monomeren A hergestelltes Polymer eine Glasübergangstemperatur von 10 bis 55 °C hat,
ii. Polymerisation einer Mischung von olefinisch ungesättigten Monomeren B durch Emulsionspolymerisation in Wasser unter Verwendung eines Emulgators und eines wasserlöslichen Initiators in Gegenwart des unter i. erhaltenen Polymerisats,
wobei
in der Reaktionslösung eine Konzentration der Monomere von 6,0 Gew.-% während der gesamten Reaktionsdauer nicht überschritten wird, und
die Mischung von olefinisch ungesättigten Monomeren B mindestens ein mehrfach olefinisch ungesättigtes Monomer enthält,
iii. Polymerisation einer Mischung von olefinisch ungesättigten Monomeren C durch Emulsionspolymerisation in Wasser unter Verwendung eines Emulgators und eines wasserlöslichen Initiators in Gegenwart des unter ii. erhaltenen Polymerisats,
wobei
in der Reaktionslösung eine Konzentration der Monomere von 6,0 Gew.-%, während der gesamten Reaktionsdauer nicht überschritten wird, und
iv. Einstellung des pH-Werts der Reaktionslösung auf einen pH-Wert von 7,5 bis 8,5,

**dadurch gekennzeichnet, dass**

a. die Mischung von olefinisch ungesättigten Monomeren A mindestens 50,0 Gew.-% eines oder mehrerer Monomere mit einer Löslichkeit in Wasser von < 0,5 g/l bei 25°C, enthält,
in der Reaktionslösung aus Stufe i. eine Konzentration der Monomere A von 6,0 Gew.-% nicht überschritten wird, und das resultierende Polymerisat nach der Stufe i. eine Teilchengröße von 20 bis 110 nm, hat,
b. ein aus den Monomeren B hergestelltes Polymer eine Glasübergangstemperatur von -35 bis 12 °C hat, und das resultierende Polymerisat nach der Stufe ii. eine Teilchengröße von 130 bis 200 nm hat,
c. ein aus den Monomeren C hergestelltes Polymer eine Glasübergangstemperatur von -50 bis 15 °C hat, und das resultierende Polymerisat nach der Stufe iii. eine Teilchengröße von 150 bis 280 nm hat.

**2.** Polymerisat gemäß Anspruch 1, **dadurch gekennzeichnet, dass** die Masse der Monomerenmischung A, bezogen auf die Gesamtmasse der Monomerenmischungen A, B, und C, 1 bis 10 % beträgt, die Masse der Monomerenmischung B, bezogen auf die Gesamtmasse der Monomerenmischungen A, B, und C, 60 bis 80 % beträgt und die Masse der Monomerenmischung C, bezogen auf die Gesamtmasse der Monomerenmischungen A, B, und C, 10 bis 30 % beträgt.

**3.** Polymerisat gemäß einem der Ansprüche 1 oder 2, **dadurch gekennzeichnet, dass** der unter i., ii. und iii. verwendete Emulgator ausgewählt ist aus der Gruppe bestehend aus ethoxylierten oder propoxylierten Alkanolen mit 10 bis 40 Kohlenstoffatomen.

**4.** Polymerisat nach einem der Ansprüche 1 bis 3, **dadurch gekennzeichnet, dass** die Monomermischung A mindestens einen einfach ungesättigten Ester der (Meth)acrylsäure mit einem unsubstituierten Alkylrest und mindestens ein vinylisch, einfach ungesättigtes Monomer mit einem aromatischen Rest an der Vinylgruppe enthält.

**5.** Polymerisat nach einem der Ansprüche 1 bis 4, **dadurch gekennzeichnet, dass** die Monomermischung B mindestens ein mehrfach olefinisch ungesättigtes Monomer, mindestens einen einfach ungesättigten Ester der (Meth)acrylsäure mit einem unsubstituierten Alkylrest, und mindestens ein vinylisch, einfach ungesättigtes Monomer mit einem aromatischen Rest an der Vinylgruppe enthält.

**6.** Polymerisat nach einem der Ansprüche 1 bis 5, **dadurch gekennzeichnet dass** die Monomermischung C mindestens eine alpha-beta ungesättigte Carbonsäure, mindestens einen einfach ungesättigten Ester der (Meth)acrylsäure mit einem mit einer oder mehreren Hydroxylgruppen substituierten Alkylrest und mindestens einen einfach ungesättigten Ester der (Meth)acrylsäure mit einem unsubstituierten Alkylrest enthält.

**7.** Pigmentierter wässriger Basislack, **dadurch gekennzeichnet, dass** er mindestens ein Polymerisat nach einem der Ansprüche 1 bis 6 enthält.

**8.** Pigmentierter wässriger Basislack gemäß Anspruch 7, **dadurch gekennzeichnet, dass** die Summe über die gewichtsprozentualen Anteile, bezogen auf das Gesamtgewicht des pigmentierten wässrigen Basislacks, aller erfindungsgemäßen Polymerisate 0,1 bis 30 Gew.-% beträgt.

**9.** Pigmentierter wässriger Basislack nach Anspruch 7 oder 8, **dadurch gekennzeichnet, dass** er als weiteres Bindemittel mindestens ein Polyurethanharz enthält.

**10.** Pigmentierter wässriger Basislack nach einem der Ansprüche 7 bis 9, **dadurch gekennzeichnet, dass** er ein mittels olefinisch ungesättigten Monomeren gepfropftes Polyurethanharz, welches zudem Hydroxylgruppen enthält, sowie ein Melaminharz umfasst.

**11.** Verwendung eines Polymerisats gemäß einem der Ansprüche 1 bis 6 in pigmentierten wässrigen Basislacken zur Haftungsverbesserung.

**12.** Verfahren zur Herstellung einer mehrschichtigen Lackierung, bei dem

(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,

**dadurch gekennzeichnet, dass** in Stufe (1) ein pigmentierter wässriger Basislack gemäß einem der Ansprüche 7

bis 10 eingesetzt wird.

13. Verfahren nach Anspruch 12, **dadurch gekennzeichnet, dass** es sich bei dem Substrat aus Stufe (1) um eine Mehrschichtlackierung handelt, welche Fehlstellen besitzt.

14. Mehrschichtlackierung, herstellbar nach dem Verfahren gemäß Anspruch 12.

15. Verfahren nach Anspruch 13, **dadurch gekennzeichnet, dass** es sich bei der als Substrat eingesetzten und Fehlstellen aufweisenden Mehrschichtlackierung um eine solche gemäß Anspruch 14 handelt.

## Claims

1. Aqueous dispersion comprising at least one polymer, preparable by

   i. polymerizing a mixture of olefinically unsaturated monomers A by emulsion polymerization in water, using an emulsifier and a water-soluble initiator, where
   a polymer prepared from the monomers A has a glass transition temperature of 10 to 55°C,
   ii. polymerizing a mixture of olefinically unsaturated monomers B by emulsion polymerization in water, using an emulsifier and a water-soluble initiator, in the presence of the polymer obtained under i.,
   where
   a monomers concentration of 6.0 wt% in the reaction solution is not exceeded throughout the reaction period, and the mixture of olefinically unsaturated monomers B comprises at least one polyolefinically unsaturated monomer,
   iii.polymerizing a mixture of olefinically unsaturated monomers C by emulsion polymerization in water, using an emulsifier and a water-soluble initiator, in the presence of the polymer obtained under ii.,
   where
   a monomers concentration of 6.0 wt% in the reaction solution is not exceeded throughout the reaction period, and
   iv. adjusting the pH of the reaction solution to a pH of 7.5 to 8.5,

   **characterized in that**

   a. the mixture of olefinically unsaturated monomers A comprises at least 50.0 wt% of one or more monomers having a solubility in water of < 0.5 g/l at 25°C,
   a monomers A concentration of 6.0 wt% in the reaction solution from stage i. is not exceeded, and the resulting polymer after stage i. has a particle size of 20 to 110 nm,
   b. a polymer prepared from the monomers B has a glass transition temperature of -35 to 12°C, and the resulting polymer after stage ii. has a particle size of 130 to 200 nm,
   c. a polymer prepared from the monomers C has a glass transition temperature of -50 to 15°C, and the resulting polymer after stage iii. has a particle size of 150 to 280 nm.

2. Polymer according to Claim 1, **characterized in that** the mass of the monomer mixture A, based on the total mass of the monomer mixtures A, B and C, is 1 to 10%, the mass of the monomer mixture B, based on the total mass of the monomer mixtures A, B and C, is 60 to 80%, and the mass of the monomer mixture C, based on the total mass of the monomer mixtures A, B and C, is 10 to 30%.

3. Polymer according to either of Claims 1 and 2, **characterized in that** the emulsifier used under i., ii. and iii. is selected from the group consisting of ethoxylated or propoxylated alkanols having 10 to 40 carbon atoms.

4. Polymer according to any of Claims 1 to 3, **characterized in that** the monomer mixture A comprises at least one monounsaturated ester of (meth)acrylic acid having an unsubstituted alkyl radical and at least one vinylically monounsaturated monomer having an aromatic radical on the vinyl group.

5. Polymer according to any of Claims 1 to 4, **characterized in that** the monomer mixture B comprises at least one polyolefinically unsaturated monomer, at least one monounsaturated ester of (meth)acrylic acid having an unsubstituted alkyl radical, and at least one vinylically monounsaturated monomer having an aromatic radical on the vinyl group.

6. Polymer according to any of Claims 1 to 5, **characterized in that** the monomer mixture C comprises at least one

alpha-beta unsaturated carboxylic acid, at least one monounsaturated ester of (meth)acrylic acid having an alkyl radical substituted by one or more hydroxyl groups and at least one monounsaturated ester of (meth)acrylic acid having an unsubstituted alkyl radical.

7. Pigmented aqueous basecoat material, **characterized in that** it comprises at least one polymer according to any of Claims 1 to 6.

8. Pigmented aqueous basecoat material according to Claim 7, **characterized in that** the sum total of the weight percentage fractions, based on the total weight of the pigmented aqueous basecoat material, of all polymers of the invention is 0.1 to 30 wt%.

9. Pigmented aqueous basecoat material according to Claim 7 or 8, **characterized in that** it comprises as further binder at least one polyurethane resin.

10. Pigmented aqueous basecoat material according to any of Claims 7 to 9, **characterized in that** it comprises a polyurethane resin, said resin being grafted by means of olefinically unsaturated monomers and also containing hydroxyl groups, and also a melamine resin.

11. Use of a polymer according to any of Claims 1 to 6 in pigmented aqueous basecoat materials for improving adhesion.

12. Process for producing a multicoat paint system, in which

(1) a pigmented aqueous basecoat material is applied to a substrate,
(2) a polymer film is formed from the coating material applied in stage (1),
(3) a clearcoat material is applied to the resulting basecoat film, and subsequently
(4) the basecoat film is cured together with the clearcoat film,

**characterized in that** a pigmented aqueous basecoat material according to any of Claims 7 to 10 is used in stage (1).

13. Process according to Claim 12, **characterized in that** the substrate from stage (1) is a multicoat paint system which possesses defect sites.

14. Multicoat paint system producible by the process according to Claim 12.

15. Process according to Claim 13, **characterized in that** the multicoat paint system employed as substrate and exhibiting defect sites is a system according to Claim 14.

## Revendications

1. Dispersion aqueuse, contenant au moins un polymérisat, pouvant être préparé par

i. polymérisation d'un mélange de monomères oléfiniquement insaturés A par polymérisation en émulsion dans l'eau avec utilisation d'un émulsifiant et d'un initiateur soluble dans l'eau, un polymère préparé à partir des monomères A possédant une température de transition vitreuse de 10 à 55 °C,
ii. polymérisation d'un mélange de monomères oléfiniquement insaturés B par polymérisation en émulsion dans l'eau avec utilisation d'un émulsifiant et d'un initiateur soluble dans l'eau en présence du polymérisat obtenu au point i.,
dans la solution de réaction, une concentration des monomères de 6,0 % en poids pendant la durée totale de réaction n'étant pas dépassée, et
le mélange de monomères oléfiniquement insaturés B contenant au moins un monomère oléfiniquement insaturé plusieurs fois,
iii. polymérisation d'un mélange de monomères oléfiniquement insaturés C par polymérisation en émulsion dans l'eau avec utilisation d'un émulsifiant et d'un initiateur soluble dans l'eau en présence du polymérisat obtenu au point ii.,
dans la solution de réaction, une concentration des monomères de 6,0 % en poids pendant la durée totale de réaction n'étant pas dépassée, et
iv. ajustement de la valeur de pH de la solution de réaction à la valeur de pH de 7,5 à 8,5,

**caractérisée en ce que**

a. le mélange de monomères oléfiniquement insaturés A contient au moins 50,0 % en poids d'un ou plusieurs monomères dotés d'une solubilité dans l'eau < 0,5 g/l à 25 °C,
dans la solution de réaction de l'étape i., une concentration des monomères A de 6,0 % en poids n'est pas dépassée,
et le polymérisat résultant après l'étape i. présente une grosseur de particule de 20 à 110 nm,
b. un polymère préparé à partir des monomères B possède une température de transition vitreuse de -35 à 12 °C, et
le polymérisat résultant après l'étape ii. possède une grosseur de particule de 130 à 200 nm,
c. un polymère préparé à partir des monomères C possède une température de transition vitreuse de -50 à 15 °C, et
le polymérisat résultant après l'étape iii. possède une grosseur de particule de 150 à 280 nm.

**2.** Polymérisat selon la revendication 1, **caractérisé en ce que** la masse du mélange de monomères A, par rapport à la masse totale des mélanges de monomères A, B, et C, est de 1 à 10 %, la masse du mélange de monomères B, par rapport à la masse totale des mélanges de monomères A, B, et C, est de 60 à 80 % et la masse du mélange de monomères C, par rapport à la masse totale des mélanges de monomères A, B, et C, est de 10 à 30 %.

**3.** Polymérisat selon l'une quelconque des revendications 1 et 2, **caractérisé en ce que** l'émulsifiant utilisé aux points i., ii. et iii. est choisi dans le groupe constitué par des alcanols éthoxylés ou propoxylés comportant 10 à 40 atomes de carbone.

**4.** Polymérisat selon l'une quelconque des revendications 1 à 3, **caractérisé en ce que** le mélange de monomères A contient au moins un ester insaturé une fois d'acide (méth)acrylique avec un radical alkyle non substitué et au moins un monomère vinylique, insaturé une fois avec un radical aromatique au niveau du groupe vinyle.

**5.** Polymérisat selon l'une quelconque des revendications 1 à 4, **caractérisé en ce que** le mélange de monomères B contient au moins un monomère oléfiniquement insaturé plusieurs fois, au moins un ester insaturé une fois d'acide (méth)acrylique avec un radical alkyle non substitué, et au moins un monomère vinylique, insaturé une fois avec un radical aromatique au niveau du groupe vinyle.

**6.** Polymérisat selon l'une quelconque des revendications 1 à 5, **caractérisé en ce que** le mélange de monomères C contient au moins un acide carboxylique alpha-bêta insaturé, au moins un ester insaturé une fois d'acide (méth)acrylique avec un radical alkyle substitué par un ou plusieurs groupes hydroxyle et au moins un ester insaturé une fois d'acide (méth)acrylique avec un radical alkyle non substitué.

**7.** Laque de base aqueuse pigmentée, **caractérisée en ce qu'**elle contient au moins un polymérisat selon l'une quelconque des revendications 1 à 6.

**8.** Laque de base aqueuse pigmentée selon la revendication 7, **caractérisée en ce que** la somme des proportions en pourcentage en poids, par rapport au poids total de la laque de base aqueuse pigmentée, de tous les polymérisats selon l'invention, est de 0,1 à 30 % en poids.

**9.** Laque de base aqueuse pigmentée selon la revendication 7 ou 8, **caractérisée en ce qu'**elle contient au moins une résine de polyuréthane en tant que liant supplémentaire.

**10.** Laque de base aqueuse pigmentée selon l'une quelconque des revendications 7 à 9, **caractérisée en ce qu'**elle comprend une résine de polyuréthane greffée au moyen de monomères oléfiniquement insaturés, qui contient en outre des groupes hydroxyle, ainsi qu'une résine de mélamine.

**11.** Utilisation d'un polymérisat selon l'une quelconque des revendications 1 à 6 dans des laques de base aqueuses pigmentées pour l'amélioration de l'adhérence.

**12.** Procédé pour la préparation d'un laquage multicouche, dans lequel

(1) une laque de base aqueuse pigmentée est appliquée sur un substrat,
(2) un film de polymère est formé à partir de la laque appliquée dans l'étape (1),

(3) une laque transparente est appliquée sur la couche de laque de base ainsi obtenue et ultérieurement
(4) la couche de laque de base est durcie ensemble avec la couche de laque transparente,

**caractérisé en ce qu'**une laque de base aqueuse pigmentée selon l'une quelconque des revendications 7 à 10 est utilisée dans l'étape (1).

**13.** Procédé selon la revendication 12, **caractérisé en ce que** le substrat de l'étape (1) est un laquage multicouche, qui possède des défauts.

**14.** Laquage multicouche, pouvant être préparé par le procédé selon la revendication 12.

**15.** Procédé selon la revendication 13, **caractérisé en ce que** le laquage multicouche utilisé en tant que substrat et présentant des défauts est tel que celui selon la revendication 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19948004 A1
- DE 10043405 C1
- WO 9215405 A
- WO 2014064020 A1
- DE 10106567 A1
- DE 10106566 A1
- DE 19930665 A1
- DE 19914896 A1
- EP 0228003 A1
- EP 0634431 A1
- DE 4437535 A1
- WO 9115528 A
- EP 0521928 B1
- DE 4009858
- DE 4009858 A1


### In der Beschreibung aufgeführte Nicht-Patentliteratur


- **HONG ; KIM ; KIM ; PARK.** *Korea Polymer Journal (Korea Polym. J.,* vol. 7 (4), 213-222
- **X.-S. CHAI ; Q.X. HOU ; F.J. SCHORK.** *Journal of Applied Polymer Science,* 2006, vol. 99, 1296-1301
- Römpp-Lexikon Lacke und Druckfarben. Georg Thieme Verlag, 1998, 176-451
- Römpp-Lexikon Lacke und Druckfarben. Georg Thieme Verlag, 1998, 235
- *Korea Polym. J.,* vol. 7 (4), 213-222
- **A.B.J. RODRIGUEZ.** *JOCCA,* 1992, vol. 4, 150-153